(19) Europäisches Patentamt
European Patent Office
Office européen des brevets

(11) EP 1 746 113 A1

(12) EUROPEAN PATENT APPLICATION
published in accordance with Art. 158(3) EPC

(43) Date of publication:
**24.01.2007 Bulletin 2007/04**

(21) Application number: **05728556.1**

(22) Date of filing: **11.04.2005**

(51) Int Cl.:
***C08F 210/00*** *(2006.01)* ***C08F 236/20*** *(2006.01)*
***C08L 9/00*** *(2006.01)* ***C08L 23/02*** *(2006.01)*

(86) International application number:
**PCT/JP2005/007017**

(87) International publication number:
**WO 2005/105867 (10.11.2005 Gazette 2005/45)**

(84) Designated Contracting States:
**AT BE BG CH CY CZ DE DK EE ES FI FR GB GR HU IE IS IT LI LT LU MC NL PL PT RO SE SI SK TR**

(30) Priority: **28.04.2004 JP 2004134030**
**28.04.2004 JP 2004134031**
**28.04.2004 JP 2004134033**

(71) Applicant: **Mitsui Chemicals, Inc.**
**Minato-ku**
**Tokyo 105-7117 (JP)**

(72) Inventors:
- **MURAKAMI, Hidetatsu,**
**Mitsui Chemicals, Inc.**
**Sodegaura-shi, Chiba 2990265 (JP)**
- **OKADA, Keiji,**
**Mitsui Chemicals, Inc.**
**Sodegaura-shi, Chiba 2990265 (JP)**
- **ICHINO, Kotaro,**
**Mitsui Chemicals, Inc.**
**Ichihara-shi, Chiba 2990108 (JP)**
- **KAWASAKI, Masaaki,**
**Mitsui Chemicals, Inc.**
**Ichihara-shi, Chiba 2990108 (JP)**
- **EBATA, Hiroki,**
**Mitsui Chemicals, Inc.**
**Ichihara-shi, Chiba 2990108 (JP)**
- **HASADA, Yasuhiro,**
**Mitsui Chemicals, Inc.**
**Ichihara-shi, Chiba 2990108 (JP)**
- **IKENAGA, Shigenobu,**
**Mitsui Chemicals, Inc.**
**Sodegaura-shi, Chiba 2990265 (JP)**

(74) Representative: **Cresswell, Thomas Anthony**
**J.A. KEMP & CO.**
**14 South Square**
**Gray's Inn**
**London WC1R 5JJ (GB)**

# (54) UNCONJUGATED POLYENE COPOLYMER, RUBBER COMPOSITION AND USES OF THOSE

(57) Disclosed are a nonconjugated polyene copolymer comprising a random copolymer having structural units derived from α-olefin (A1) of 2 to 20 carbon atoms and structural units derived from nonconjyugated polyene (A2), said nonconjugated polyene copolymer having a glass transition temerature (Tg) of -25 to 20 °C and Mooney viscosity of [ML(1+4)100°C] of 5 to 190;a rubber composition comprising the nonconjugated polyene copolymer and a diene-based rubber (B); a modifier for tires comprising the copolymer; a rubber material for tires comprising the rubber composition; a tire tread obtained from the rubber material for tires; and a tire having the tire tread.

EP 1 746 113 A1

## Description

TECHNICAL FIELD

The present invention relates to a nonconjugated polyene copolymer, a rubber composition comprising the nonconjugated polyene copolymer and a diene-based rubber, and uses thereof.

BACKGROUND ART

There has heretofore been employed in general a diene-based rubber composition composed of a styrene/ butadiene copolymer rubber (SBR) and natural rubber for a rubber material for the tread tire of an automobile. However, it has been desired for a tire to have, a high braking performance in respect of the safety, in addition to abrasion resistance and lower fuel consumption concomitant with the recent trend of facilitation of energy economization.
[Patent Document 1] Japanese Unexamined Patent Application Publication (JP-A) No. 2001-114837

DISCLOSURE OF THE INVENTION

Therefore, the present inventors have proposed rubber materials for a tire tread comprising as one component a nonconjugated cyclic polyene copolymer having a specific content of nonconjugated cyclic polyene and a specific iodine value.
The present inventors have investigated and found that there is room for improvement in terms of braking properties and fatigue resistance of a tire and also in terms of mechanical strength of the tire.
An object of the present invention is to overcome the above problems and to provide a nonconjugated polyene copolymer which can be suitably used as raw materials of a rubber material for tires, having both excellent braking performance and fuel consumption performance, a rubber composition comprising the nonconjugated cyclic polyene copolymer, a modifier for tires comprising the nonconjugated polyene copolymer, a rubber material for tires comprising the rubber composition, a tire tread produced from the rubber material for tires and a tire having the tire tread.
Another object of the present invention is to provide a nonconjugated cyclic polyene copolymer which can be suitably used as raw materials of a rubber material for tires, having improved braking performance and excellent rubber elasticity, mechanical strength, weather resistance, ozone resistance and hardness, and further excellent fatigue resistance, in addition to excellent fuel consumption performance, a rubber composition comprising the nonconjugated cyclic polyene copolymer, a modifier for tires comprising the nonconjugated polyene copolymer, a rubber material for tires comprising the rubber composition, a tire tread produced from the rubber material for tires and a tire having the tire tread.
A further object of the present invention is to provide a nonconjugated cyclic polyene copolymer which can be suitably used as raw materials of a rubber material for tires, having both excellent braking performance and fuel consumption performance and further excellent mechanical strength, a rubber composition comprising the nonconjugated cyclic polyene copolymer, a modifier for tires comprising the nonconjugated polyene copolymer, a rubber material for tires comprising the rubber composition, a tire tread produced from the rubber material for tires and a tire having the tire tread.
A still further object of the present invention is to provide a nonconjugated cyclic polyene copolymer which can be suitably used as raw materials of a rubber material for tires, having improved braking performance and excellent rubber elasticity, weather resistance, ozone resistance and hardness, and further excellent mechanical strength, in addition to excellent fuel consumption performance, a rubber composition comprising the nonconjugated polyene copolymer, a modifier for tires comprising the nonconjugated polyene copolymer, a rubber material for tires comprising the rubber composition, a tire tread produced from the rubber material for tires and a tire having the tire tread.
The present invention provides a nonconjugated polyene copolymer comprising a random copolymer having structural units derived from $\alpha$-olefin (A1) of 2 to 20 carbon atoms and structural units derived from nonconjyugated polyene (A2), the nonconjugated polyene copolymer has a glass transition temerature (Tg) of -25 to 20 °C and Mooney viscosity of [ML(1+4)100°C] of 5 to 190.
Further, the present invention provides a rubber composition comprising the nonconjugated polyene copolymer according to the invention and a diene-based rubber (B); a modifier for tires comprising the copolymer according to the invention; a rubber material for tires comprising the rubber composition; a tire tread obtained from the rubber material for tires; and a tire having the tire tread.
The nonconjugated polyene copolymer according to the invention can be suitably used as raw materials of a rubber material for tires and can be also used as a modifier for tires, having both excellent braking performance and fuel consumption performance. Further, since the rubber composition according to the invention comprises the nonconjugated cyclic polyene copolymer, the composition can be used to obtain a tire having both excellent braking performance and fuel consumption performance. Furthermore, the rubber composition can be used as a rubber material for tires. Since

the tire tread according to the invention is produced from the rubber material for tires, there can be provided a tire having both excellent braking performance and fuel consumption performance. The tire according to the invention has both excellent braking performance and fuel consumption performance, since the tire is provided with the tire tread.

Further, the nonconjugated polyene copolymer according to the invention is preferably any one of four copolymers given below. Hereinafter, these copolymers are referred to as a first nonconjugated polyene copolymer, a second nonconjugated polyene copolymer and a third nonconjugated polyene copolymer according to the invention, respectively.

The first nonconjugated polyene copolymer according to the invention is the nonconjugated polyene copolymer according to the invention comprising a random copolymer having structural units derived from α-olefin (A1) of 2 to 20 carbon atoms and structural units derived from nonconjyugated cyclic polyene (A3), wherein the content of structural units derived from α-olefin (A1) of 2 to 20 carbon atoms is more than 93 to 96 mol% and the content of structural units derived from nonconjyugated cyclic polyene (A3) is 4 to less than 7 mol%.

The first nonconjugated polyene copolymer according to the invention is a specific nonconjugated cyclic polyene copolymer, and therefore can be suitably used as raw materials of a rubber material for tires, having improved braking performance and excellent rubber elasticity, mechanical strength, weather resistance, ozone resistance and hardness, and further excellent fatigue resistance, in addition to excellent fuel consumption performance and can be also used as a modifier for tires. The conventional copolymers have a large tan δ at 0°C, but they could not be said to have sufficient braking performance. The first nonconjugated polyene copolymer according to the invention has, in particular, high braking performance because it has an excellent balance between large tan δ at 0°C and low hardness. The term "low hardness" means a large ground contact area and leads to having excellent braking performance. Further, a rubber composition using the first nonconjugated polyene copolymer can obtain a tire having improved braking performance and excellent rubber elasticity, mechanical strength, weather resistance, ozone resistance and hardness, and further excellent fatigue resistance, in addition to excellent fuel consumption performance, since it contains the nonconjugated cyclic polyene copolymer.

The second nonconjugated polyene copolymer according to the invention is the nonconjugated polyene copolymer according to the invention comprising a random copolymer having structural units derived from α-olefin (A1) of 2 to 20 carbon atoms and structural units derived from nonconjyugated polyene (A2), wherein the content of structural units derived from α-olefin (A1) of 2 to 20 carbon atoms is 70 to 96 mol% and the content of the structural units derived from nonconjyugated polyene (A2) is 4 to 30 mol% and a decalin insoluble content at 135°C is 0.5% by weight or more.

The second nonconjugated polyene copolymer according to the invention is a specific nonconjugated polyene copolymer, and therefore can be suitably used as raw materials of a rubber material for tires, having both excellent braking performance and fuel consumption performance and further excellent mechanical strength and can be also used as a modifier for tires. Further, a rubber composition using the second nonconjugated polyene copolymer can obtain a tire having both excellent braking performance and fuel consumption performance and further excellent mechanical strength, since it contains the nonconjugated cyclic polyene copolymer.

The third nonconjugated polyene copolymer according to the invention is the nonconjugated polyene copolymer according to the invention, being a random copolymer from α-olefin (A1) of 2 to 20 carbon atoms and nonconjugated polyene (A2), which satisfies the following (iii) to (v) requirements:

(iii) an iodine value is 30 g/100 g or more;

(iv) it meets $0.0136 \leq (\eta_{0.1}^*)^{0.3859}/\eta_{10}^*$ wherein $\eta_{0.1}^*$ is a viscosity at 0.1 rad/sec (Pa·s) and $\eta_{10}^*$ is a viscosity at 10 rad/sec (Pa·s); and

(v) the content of the structural units derived from ethylene is in the range of 50 mol% or more based on 100 mol% of the total amount of α-olefin (A1) having 2 to 20 carbon atoms and nonconjugated cyclic polyene (A2) and a B value indicated below satisfies the relationship of the following formula [1]:

$$B \leq (1/a-1) \times 0.4 + 1 \qquad [1]$$

wherein $B = (c + d)/(2 \times a \times (e + f))$, in which a is an ethylene molar fraction; c is an ethylene/α-olefin dyad molar fraction; d is an ethylene/nonconjugated polyene dyad molar fraction; e is an α-olefin molar fraction; and f is a nonconjugated polyene molar fraction.

The third nonconjugated polyene copolymer according to the invention is a specific nonconjugated polyene copolymer, and therefore can be suitably used as raw materials of a rubber material for tires, having improved braking performance and excellent rubber elasticity, weather resistance, ozone resistance and hardness, and further excellent mechanical strength, in addition to excellent fuel consumption performance, and can be also used as a modifier for tires. Further, a rubber composition using the third nonconjugated polyene copolymer can obtain a tire having improved braking performance and excellent rubber elasticity, weather resistance, ozone resistance and hardness, and further excellent

mechanical strength, in addition to excellent fuel consumption performance, since it contains the nonconjugated cyclic polyene copolymer.

Preferred Embodyments

Hereinafter, a nonconjugated polyene copolymer according to the present invention, a rubber copolymer and uses thereof will be specifically explained.

[Nonconjugated Polyene Copolymer]

The nonconjugated polyene copolymer according to the invention is a random copolymer comprising structural units derived from α-olefin (A1) having 2 to 20 carbon atoms and structural units derived from nonconjugated polyene (A2), in which it has a glass transition temperature (Tg) of -25 to 20°C and a Mooney viscosity [ML(1+4)100°C] of 5 to 190.

The glass transition temperature (Tg) of the nonconjugated polyene copolymer according to the invention is -25 to 20°C, preferably -20 to 10°C. When the nonconjugated polyene copolymer is used for a tire, it is possible to improve the gripping ability on the road face while maintaining rolling resistance during steady maneuvering as long as it has the glass transition temperature (Tg) in this range. The glass transition temperature (Tg) can be determined by a dynamic viscoelasticity measurements from the peak on the damping rate in the measurement of the temperature dispersion.

The nonconjugated polyene copolymer according to the invention has a Mooney viscosity [ML(1+4)100°C] of 5 to 190, preferably 20 to 150, more preferably 30 to 110. When the nonconjugated polyene copolymer (A) has the Mooney viscosity in the above-mentioned range, the nonconjugated polyene copolymer (A) has excellent mechanical strength and workability, and when the nonconjugated polyene copolymer is used for a tire, the tire is excellent in braking performance.

In addition, the nonconjugated polyene copolymer according to the invention is preferably any one of the following first to third nonconjugated polyene copolymers.

[First Nonconjugated Polyene Copolymer]

The first nonconjugated polyene copolymer is the nonconjugated polyene copolymer according to the invention comprising a random copolymer having structural units derived from α-olefin (A1) of 2 to 20 carbon atoms and structural units derived from nonconjyugated cyclic polyene (A3), wherein the content of structural units derived from α-olefin (A1) of 2 to 20 carbon atoms is more than 93 to 96 mol%, preferably 94 to 96 mol%, and the content of structural units derived from nonconjyugated cyclic polyene (A3) is 4 to less than 7 mol%, preferably 4 to 6 mol%.

Since the first nonconjugated polyene copolymer has the content of nonconjugated cyclic polyene (A3) in the above range, the first nonconjugated polyene copolymer has lower hardness and provides tires exhibiting higher braking performance-improving effects when it is used in tires, as compared to a nonconjugated polyene copolymer having the content of nonconjugated cyclic polyene (A3) higher than the above range.

The iodine value of the first nonconjugated polyene copolymer is not particularly limited, but preferably 55 g/100 g or less, more preferably less than 50 g/100 g. In order to obtain a copolymer of the same Tg with such a low iodine value, as described in detail below, an effective technique is to lower a B value.

[Second Nonconjugated Polyene Copolymer]

The second nonconjugated polyene copolymer is the nonconjugated polyene copolymer according to the invention comprising a random copolymer having structural units derived from α-olefin (A1) of 2 to 20 carbon atoms and structural units derived from nonconjyugated polyene (A2), wherein the content of structural units derived from α-olefin (A1) of 2 to 20 carbon atoms is 70 to 96 mol%, preferably 80 to 96 mol%, more preferably 88 to 96 mol%, and the content of the structural units derived from nonconjyugated polyene (A2) is 4 to 30 mol%, preferably 4 to 20 mol%, more preferably 4 to 12 mol%, and a decalin insoluble content at 135°C is 0.5% by weight or more.

Since the second nonconjugated polyene copolymer has the content of nonconjugated polyene (A2) in the above range, the second nonconjugated polyene copolymer has lower hardness and provides tires exhibiting higher braking performance-improving effects when it is used in tires, as compared to a nonconjugated polyene copolymer having the content of nonconjugated cyclic polyene (A2) higher than the above range.

A decalin insoluble content at 135°C of the second nonconjugated polyene copolymer is 0.5% by weight or more, preferably 0.5 to 50% by weight, more preferably 0.5 to 30% by weight, and particularly preferably 0.5 to 15% by weight. The decalin insoluble content at 135°C in the above range is advantageous from the viewpoint of operation continuity in the case of a solution polymerization.

The measurement of the decalin insoluble content at 135°C is carried out as follows:

1. Measurement Method

(1) A sample is finely cut and 0.25 g ($\pm$10%) of the sample is weighed (A(g)).
(2) The weighed sample is introduced into a 500-ml Erlenmeyer flask and 250 ml of decalin is added thereto.
(3) A rotator is placed in the Erlenmeyer flask and the flask is capped.
(4) The beaker is put in an aluminum block bath set at 140°C (liquid temperature: 135°C) to preheat for 15 minutes.
(5) After 15 minutes, the rotator is rotated to carry out dissolution under stirring for 60 minutes.
(6) The weight of a 150-mesh stainless wire gauze vessel is weighed (B(g)).
(7) The dissolved sample is filtered using the wire gauze vessel.
(8) The inside of the flask is washed with fresh decalin (room temperature) and filtered (this operation is repeated three times).
(9) The inside of the wire gauze vessel is washed with fresh decalin (room temperature).
(10) The wire gauze vessel is dried for 1 hour using a vacuum drier at 105 $\pm$ 5°C.
(11) After standing to cool at room temperature for 1 hour, the weight of the wire gauze vessel is weighed (C(g)).

2. Calculation Method

$$\text{Decalin Insoluble Content} = (C - B) \times 100/A$$

Further, the iodine value is not particularly limited, but preferably 80 g/100 g or less, more preferably less than 70 g/100 g.

[Third Nonconjugated Polyene Copolymer]

The third nonconjugated polyene copolymer is the nonconjugated polyene copolymer according to the invention, being a random copolymer from $\alpha$-olefin (A1) of 2 to 20 carbon atoms and nonconjugated polyene (A2), which satisfies the following (iii) to (v) requirements:

(iii) an iodine value is 30 g/100 g or more;
(iv) it meets $0.0136 \leq (\eta_{0.1}^*)^{0.3859}/\eta_{10}^*$ wherein $\eta_{0.1}^*$ is a viscosity at 0.1 rad/sec (Pa·s) and $\eta_{10}^*$ is a viscosity at 10 rad/sec (Pa·s); and
(v) the content of the structural units derived from ethylene is in the range of 50 mol% or more based on 100 mol% of the total amount of $\alpha$-olefin (A1) having 2 to 20 carbon atoms and nonconjugated cyclic polyene (A2) and the B value indicated below satisfies the relationship of the following formula [1]:

$$B \leq (1/a-1) \times 0.4 + 1 \qquad [1]$$

wherein B = (c + d)/(2 $\times$ a $\times$ (e + f)), in which a is an ethylene molar fraction; c is an ethylene/$\alpha$-olefin dyad molar fraction; d is an ethylene/nonconjugated polyene dyad molar fraction; e is an $\alpha$-olefin molar fraction; and f is a nonconjugated polyene molar fraction.

The third nonconjugated polyene copolymer has the content of the structural units derived from $\alpha$-olefin (A1) of preferably 70 to 96 mol%, more preferably 80 to 96 mol%, particularly preferably 88 to 96 mol% and the content of the structural units derived from nonconjugated polyene (A2) of preferably 4 to 30 mol%, more preferably 4 to 20 mol%, particularly preferably 4 to 12 mol%. Since the third nonconjugated polyene copolymer has the content of nonconjugated polyene (A2) in the above range, the third nonconjugated polyene copolymer has lower hardness and provides tires exhibiting higher braking performance-improving effects when it is used in tires, as compared to a nonconjugated polyene copolymer having the content of nonconjugated polyene (A2) higher than the above range.

The iodine value of the third nonconjugated polyene copolymer is 30 g/100 g or more, preferably 30 to 100 g/100 g, more preferably 35 to 70 g/100 g. The iodine value in the above range does not cause a problem in strength when it is used in tires.

The $(\eta_{0.1}^*)^{0.3859}/\eta_{10}^*$ of the third nonconjugated polyene copolymer satisfies $0.0136 \leq (\eta_{0.1}^*)^{0.3859}/\eta_{10}^*$, preferably $0.0141 \leq (\eta_{0.1}^*)^{0.3859}/\eta_{10}^*$, more preferably $0.0147 \leq (\eta_{0.1}^*)^{0.3859}/\eta_{10}^*$. If the $(\eta_{0.1}^*)^{0.3859}/\eta_{10}^*$ satisfies the above range, there is provided tires which has excellent strength when it is used in tires. In order to adjust the $(\eta_{0.1}^*)^{0.3859}/\eta_{10}^*$

to the above range, long chain branching may be introduced onto a polymer by means of a method of copolymerizing a monomer having plural polymerizable double bonds, or a polymer having a high molecular weight may be added in a small amount.

These $\eta_{0.1}$* and $\eta_{10}$* values can be calculated from the following method:

The frequency dependency of η* (complex viscosity coefficient) is determined, using a disk-shaped sample having a diameter of 25 mm and a thickness of 2 mm, on a viscoelasticity tester (Model RDS II, manufactured by Rheometrics Inc.) under conditions of a measuring temperature of 190°C, a frequency of 0.01 to 500 rad/s and a strain ratio of 1.0%. η* at 0.1 rad/s is $\eta_{0.1}$* and η* at 10 rad/s is $\eta_{10}$*. This ratio is not large in general polymers. It is assumed that to have a relatively large ratio compared to general copolymers, is to have a structure containing much long chain branching.

[B value]

In the nonconjugated polyene copolymer according to the invention, in order to obtain the nonconjugated polyene copolymer having the same Tg with a low content of nonconjugated cyclic polyene and/or a low iodine value, one technique is to produce a copolymer having a low B value.

From this viewpoint, the nonconjugated polyene copolymer according to the invention is one preferred embodiment that the content of the structural units derived from ethylene is in the range of 50 mol% or more based on 100 mol% of the total amount of α-olefin (A1) having 2 to 20 carbon atoms and nonconjugated cyclic polyene (A2) and further the B value indicated below preferably satisfies the relationship of the following formula [1], preferably the following formula [2], more preferably the following formula [3], particularly preferably the following formula [4]. Further, the above-mentioned third nonconjugated polyene copolymer has one condition satisfying the formula [1].

$$B \leq (1/a-1) \times 0.4 + 1 \qquad [1]$$

$$B \leq (1/a-1) \times 0.3 + 1 \qquad [2]$$

$$B \leq (1/a-1) \times 0.2 + 1 \qquad [3]$$

$$B \leq (1/a-1) \times 0.15 + 1 \qquad [4]$$

In order to produce the nonconjugated polyene copolymer in which the B value satisfies the formula [1], for example, there is a method of using a metallocene compound represented by the formula (8) or formula (9) to be described below.

The B value is an index indicating randomness of the copolymerized monomer chain distribution.

$$B \leq (1/a-1) \times 0.4 + 1 \qquad [1]$$

wherein B = (c + d)/(2 × a × (e + f)), in which a is an ethylene molar fraction; c is an ethylene/α-olefin dyad molar fraction; d is an ethylene/nonconjugated polyene dyad molar fraction; e is an α-olefin molar fraction; and f is a nonconjugated polyene molar fraction.

Herein, the fractions a, c, d, e and f may be determined from a $^{13}$C-NMR spectrum on the basis of the report by J. C. Randall (Macromolecules, 15, 353 (1982)) and J. Ray (Macromolecules, 10, 773 (1977)).

In this report, a dyad of carbon atoms (methylene group) in a polymer main chain is determined from a $^{13}$C-NMR spectrum of a copolymer comprising ethylene and propylene and the randomness and blocking properties being the copolymerization form of the copolymer are discussed by the sequence of the copolymer.

In the mathematical expression 1, both an α-olefin and nonconjugated polyene dyad molar fraction and a

nonconjugated polyene and nonconjugated polyene dyad molar fraction are low, and thus are not considered in the invention. Further, an ethylene and nonconjugated polyene dyad molar fraction was twice of a nonconjugated polyene molar fraction.

In the formula [1], it shows that the larger the B value, the shorter the block chain of α-olefin units or nonconjugated cyclic polyene units and the distribution of α-olefin units or nonconjugated cyclic polyene units is uniform. On the contrary, it shows that the smaller the B value, the distribution of α-olefin units is not uniform and the longer the block chain.

With respect to the nonconjugated polyene copolymer according to the invention, the molar fraction is separately calculated from absorption intensity based on a specific carbon of polyene and the ethylene/nonconjugated polyene dyad molar fraction was calculated by realizing the above assumption. The chain assignment by the other methylene carbon was done according to the above literature.

Hereinafter, a method of calculating a B value is specifically shown as an application by taking as an example the nonconjugated cyclic polyene copolymer obtained from ethylene, propylene and 5-ethylidene-2-norbornene (ENB) being the copolymer according to the invention.

First, the following nine NMR integration values of absorption intensities for methylene carbons were obtained: (1) αβ, (2) αγ + αδ, (3) βγ, (4) βδ, (5) γδ, (6) δδ, (7) 3E, (8) 3Z and (9) αα + 1Z + 5E + 5Z + 6E + 6Z

Herein, a symbol consisting of numbers and alphabetic characters in (7) to (9) is carbons derived from ENB, and the numbers indicate the positions in the formula given below, and the alphabetic characters, E and Z denote E isomer and Z isomer, respectively. Further, Greek characters indicate the positions of methylene carbon atoms located between carbon atoms on shortest main chain to which two methyl groups are bonded, and a carbon atom adjacent to a carbon atom to which the methylene group is bonded is assumed as α. For example, the carbon atom on the main chain, which is adjacent to a carbon atom to which one methyl group is bonded and is assigned to a carbon atom at the third in distance from the carbon atom to which the other methyl group is bonded, is αγ.

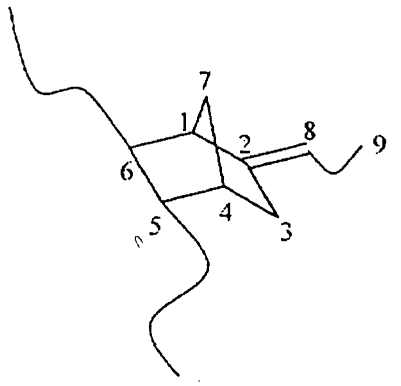

When the integration values were actually calculated, (2) was a total of the plural peaks near 37 to 39 ppm, (6) was a value obtained by subtracting the γγ and γδ peaks from the total of the plural peaks near 29 to 31 ppm, and (9) was the total of the plural peaks near 44 to 48 ppm.

Further, αα was calculated as follows. The identification of the peaks was done according to the above literature:
αα = αα + 1Z + 5E + 5Z + 6E + 6Z - 2 × 3E - 3 × 3Z = (9) - 2 × (7) - 3 × (8)

Subsequently, the 6 dyads obtained from three monomers were calculated from the obtained integration values as follows. Further, the dyads of NN (ENB-ENB chain) and NP (ENB-propylene chain) derived from a small composition of ENB was 0. The dyad of NE was twice the value corresponding to a molar fraction calculated from absorption intensity assigned to a carbon atom on a cyclic ENB.

$$\text{PP (propylene-propylene chain)} = \alpha\alpha + \alpha\beta/4$$

$$\text{PE (propylene-ethylene chain)} = \alpha\gamma + \alpha\delta + \alpha\beta/2$$

$$EE\ (\text{ethylene-ethylene chain}) = (\beta\delta + \delta\delta)/2 + (\gamma\delta + \beta\gamma)/4$$

$$NE\ (\text{ENB-ethylene chain}) = (3E + 3Z) \times 2$$

Finally, each molar fraction of the composition was determined as follows:

$$a\ (\text{ethylene molar fraction}) = (EE + PE/2)/(PP + PE + EE + 3E + 3Z)$$

$$c\ (\text{ethylene/}\alpha\text{-olefin dyad molar fraction}) = PE/(PP + PE + EE + NE)$$

$$d\ (\text{ethylene/nonconjugated polyene dyad molar fraction}) = NE/(PP + PE + EE + NE)$$

$$e\ (\alpha\text{-olefin molar fraction}) = (PP + PE/2)/(PP + PE + EE + 3E + 3Z)$$

$$f\ (\text{nonconjugated polyene molar fraction}) = (3E + 3Z)/(PP + PE + EE + 3E + 3Z)$$

Each molar fraction of the composition calculated above, is assigned to the mathematical expression 1 to determine the mathematical expression 2, and thus the B value was calculated:

$$B = [(PE + NE)/(PP + PE + NE + EE)]/[(EE + PE/2)[(PP + PE/2) + (3E + 3Z)]/(PP + PE + EE + 3E + 3Z)^2] \quad [A]$$

In the mathematical expression A, it shows that the larger the B value, the shorter the block chain of α-olefin (propylene) units or nonconjugated cyclic polyene units and the distribution of α-olefin (propylene) units and nonconjugated cyclic polyene units is uniform. On the contrary, it shows that the smaller the B value, the distribution of the nonconjugated cyclic polyene copolymer is not uniform and the longer the block chain.

The higher the block property, for example, when the cyclic polyene as the comonomer is used in the same amount, Tg tends to increase. On the contrary, the same Tg can be attained with a small amount of the comonomer (cyclic polyene). Meanwhile, high Tg can be attained by the block property and at the same time, the nonconjugated polyene copolymer can exhibit flexibility with much less amount of the comonomer (cyclic propylene). As an index of flexibility, there may be exemplified an M100 value in Examples described to be later.

[α-Olefin (A1)]

As the α-olefin (A1) constituting the nonconjugated polyene copolymer according to the invention, there may be exemplified those α-olefin having 2 to 20 carbon atoms, preferably 2 to 15 carbon atoms, such as ethylene, propylene, 1-butene, 1-hexene, 1-octene, 1-decene, 1-dodecene and 4-methyl-1-pentene. These α-olefins (A1) may be used either alone or in a combination of two or more of them.

The nonconjugated polyene copolymer according to the invention may preferably contain, as the structural units derived from α-olefin (A1), at least structural units derived from ethylene, in which the molar ratio of the structural units derived from ethylene/structural units derived from α-olefin having 3 or more carbon atoms may be in the range of 100/0 to 1/99. Further, in the above-mentioned first and third nonconjugated polyene copolymers, the molar ratio of the structural units derived from ethylene/structural units derived from α-olefin having 3 or more carbon atoms may be in the range of more preferably 100/0 to 50/50, particularly preferably 95/5 to 50/50. Furthermore, in the above-mentioned second nonconjugated polyene copolymer, the molar ratio of the structural units derived from ethylene/structural units derived from α-olefin having 3 or more carbon atoms may be in the range of more preferably 90/10 to 60/40.

[Nonconjugated Polyene (A2)]

As the nonconjugated polyene (A2) constituting the nonconjugated polyene copolymer according to the invention, a compound having two or more nonconjugated unsaturated bonds can be used without any restriction and any of nonconjugated cyclic polyene (A3) and nonconjugated chain polyene (A4) can be used. In particular, at least part of the nonconjugated polyene (A2) is preferably the nonconjugated cyclic polyene (A3). The content of the nonconjugated cyclic polyene (A3) is in the range of preferably 10 mol% or more, more preferably 30 mol% or more, and even more preferably 50 mol% or more based on 100 mol% of the total amount of the nonconjugated polyene (A2). Further, as a preferred embodiment, there may be exemplified one in which all the nonconjugated polyene (A2) is the nonconjugated cyclic polyene (A3).

Further, in the nonconjugated polyene copolymer according to the invention, as the nonconjugated polyene (A2), there may be used any of nonconjugated polyene (A2-1) having only one carbon-carbon double bond polymerizable by a catalyst per molecule among carbon-carbon double bonds present therein and nonconjugated polyene (A2-2) having two carbon-carbon double bonds polymerizable by the catalyst per molecule among carbon-carbon double bonds present therein.

Among these, the nonconjugated polyene (A2-1) having only one carbon-carbon double bond polymerizable, does not include a chain polyene having vinyl groups ($CH_2$=CH-) at both ends thereof. If two or more carbon-carbon double bonds are present in the nonconjugated polyene (A2-1), only one carbon-carbon double bond is present as a vinyl group at the end of the molecule and the other carbon-carbon double bond (C=C) is preferably present by taking the internal olefin structure in the molecule chain (including main chain and side chain). Further, the nonconjugated cyclic polyene (A3) and the nonconjugated chain polyene (A4) include also the above-mentioned nonconjugated polyene (A2-1) and nonconjugated polyene (A2-2).

Specific examples of the nonconjugated cyclic polyene (A3) include a compound represented by the following formula (1-1):

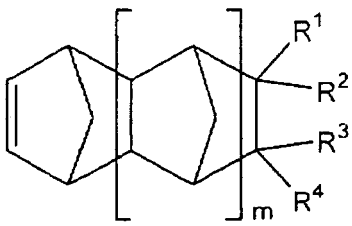

··· (1 − 1)

wherein m is an integer of 0 to 2;

> $R^1$ to $R^4$ are each independently an atom or group selected from the group consisting of a hydrogen atom, a halogen atom and a hydrocarbon group.

Examples of the halogen atom represented by $R^1$ to $R^4$ in the formula (1-1) include a fluorine atom, a chlorine atom, a bromine atom or an iodine atom.

Further, examples of the hydrocarbon group represented by $R^1$ to $R^4$ in the formula (1-1) include an alkyl group

having 1 to 20 carbon atoms, a halogenated alkyl group having 1 to 20 carbon atoms, a cycloalkyl group having 3 to 15 carbon atoms, an aromatic hydrocarbon group having 6 to 20 carbon atoms and an unsaturated hydrocarbon group having at least one double bond. More specifically, examples of the alkyl group include a methyl group, an ethyl group, a propyl group, an isopropyl group, an amyl group, a hexyl group, an octyl group, a decyl group, a dodecyl group and an octadecyl group. Examples of the halogenated alkyl group include those in which at least a part of the hydrogen atoms in the above-mentioned alkyl group is substituted with a halogen atom such as fluorine, chlorine, bromine or iodine. Examples of the cycloalkyl group include a cyclohexyl group. Examples of the aromatic hydrocarbon group include a phenyl group and a naphthyl group. Examples of the unsaturated hydrocarbon group include a vinyl group and an allyl group.

In the formula (1-1), any two of $R^1$ to $R^4$, i.e., the pairs of $R^1$ and $R^2$, $R^3$ and $R^4$, $R^1$ and $R^3$, $R^2$ and $R^4$, $R^1$ and $R^4$, and $R^2$ and $R^3$ each may be bonded to each other (under cooperation) to form a mono- or polycyclic ring and the thus formed mono- or polycyclic ring may have double bond(s).

Further, the pair of $R^1$ and $R^2$ or $R^3$ and $R^4$ in the formula (1-1) may form together an alkylidene group. Such an alkylidene group is usually an alkylidene group having 1 to 20 carbon atoms and specific examples thereof includes a methylene group ($CH_2$=), an ethylidene group ($CH_3CH$=), a propylidene group ($CH_3CH_2CH$=) and an isopropylidene group ($(CH_3)_2C$=).

Furthermore, the nonconjugated cyclic polyene (A3) represented by the formula (1-1) satisfies, for example, any of the following [i] to [iv] conditions: [i] $R^1$ to $R^9$ are bonded to each other to form a mono- or polycyclic ring having a double bond; [ii] an alkylidene group is formed from the pair of $R^1$ and $R^2$ or $R^3$ and $R^4$; [iii] $R^1$ and $R^3$ or $R^2$ and $R^4$ are bonded to each other to form a double bond; and [iv] at least one of $R^1$ to $R^4$ represents an unsaturated hydrocarbon group having one or more double bonds.

Specific examples of the nonconjugated cyclic polyene (A3) represented by the formula (1-1) include alkylidene group-containing nonconjugated cyclic polyenes (A3-1) which has an alkylidene group formed from the pair of $R^1$ and $R^2$ or $R^3$ and $R^4$, polycyclic nonconjugated cyclic polyenes (A3-2) in which any two of $R^1$ to $R^4$ may be bonded to each other to form a mono- or poly-cyclic ring having one or more double bond, unsaturated hydrocarbon group-containing nonconjugated cyclic polyenes (A3-3) in which at least one of $R^1$ to $R^4$ is a monovalent unsaturated hydrocarbon group having one or more double bonds and ring-symmetrical nonconjugated cyclic polyenes (A3-4) in which either $R^1$ and $R^3$ or $R^2$ and $R^4$ are bonded to form a double bond so that the resulting cyclic polyene has a bilaterally symmetry with respect to a line connecting the bridgehead carbon atoms or the commonly shared carbon atoms of the condensed ring with each other as an axis of symmetry.

Specific examples of the alkylidene group-containing nonconjugated cyclic polyenes (A3-1) include those which are represented by the following formula (1-2):

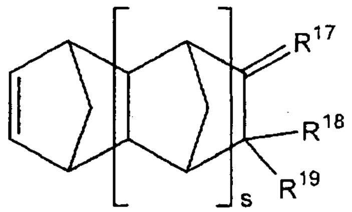

··· (1 − 2)

wherein s represents an integer of 0 to 2; $R^{17}$ represents an alkylidene group; $R^{18}$ and $R^{19}$ each independently represents an atom or a group selected from the group consisting of a hydrogen atom, a halogen atom and a hydrocarbon group and $R^{18}$ and $R^{19}$ may form together an alkylidene group.

Specific examples of the alkylidene group represented by $R^{17}$ in the formula (1-2), include those having 1 to 20 carbon atoms, such as a methylene group, an ethylidene group, a propylidene group and an isopropylidene group.

The symbol s in the formula (1-2) preferably represents 0. Examples of the halogen atom represented by $R^{18}$ and $R^{19}$ include the same as those described above. Examples of the hydrocarbon group include an alkyl group having 1 to 20 carbon atoms, a halogenated alkyl group having 1 to 20 carbon atoms, a cycloalkyl group having 3 to 15 carbon atoms and an aromatic hydrocarbon group having 6 to 20 carbon atoms.

Specific examples of the alkylidene-containing nonconjugated cyclic polyene (A3-1) represented by the formula (1-2) include 5-methylene-2-norbornene, 5-ethylidene-2-norbornene (ENB), 5-isopropylidene-2-norbornene and the compounds given below. Among them, 5-ethylidene-2-norbornene is preferred.

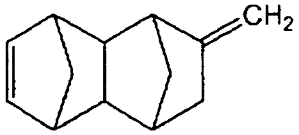
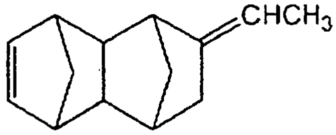

Specific examples of the above-mentioned polycyclic nonconjugated cyclic polyene (A3-2) include dicyclopentadiene (DCPD), dimethyldicyclopentadiene and the compounds given below.

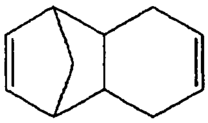
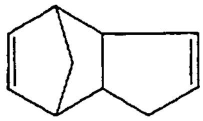
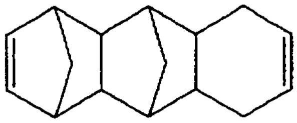

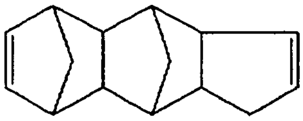

Specific examples of the above-mentioned unsaturated hydrocarbon group-containing nonconjugated cyclic polyene (A3-3) include 5-vinyl-2-norbornene and the compounds given below.

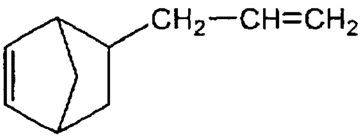
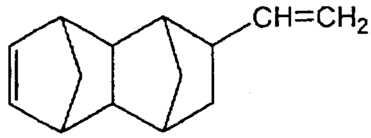

Specific examples of the above-mentioned ring-symmetrical nonconjugated cyclic polyene (A3-4) include the compounds given below.

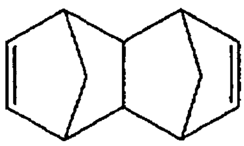
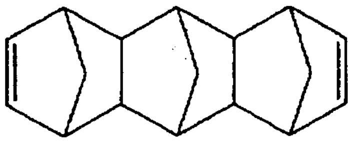

For the nonconjugated cyclic polyene (A3) represented by the formula (1-1), those in which m represents 0 are preferred, and in particular, the alkylidene group-containing nonconjugated cyclic polyenes (A3-1) in which m in the formula (1-1) represents 0, namely, the alkylidene group-containing nonconjugated cyclic polyenes (A3-1) in which s in the formula (1-2) represents 0, or the polycyclic nonconjugated cyclic polyenes (A3-2) in which m in the formula (1-1) represents 0, are particularly preferred. Most preferred ones among them are the alkylidene group-containing nonconjugated cyclic polyenes (A3-1) in which s in the formula (1-2) represents 0, and specifically 5-ethylidene-2-norbornene (ENB) is most preferable.

Specific representative examples of the nonconjugated chain polyene (A4) include 1,4-hexadiene, 1,5-heptadiene and 1,6-octadiene, which are straight-chain, and 7-methyl-1,6-octadiene and 6,7-dimethyl-1,6-octadiene, which have a branch-chain.

Examples of the other nonconjugated chain polyenes include α,ω-diene such as 1,7-octadiene and 1,9-decadiene.

Further, examples of the other nonconjugated chain polyenes (A4) include nonconjugated trienes or tetraenes (A4-1) represented by the following formula (2-1):

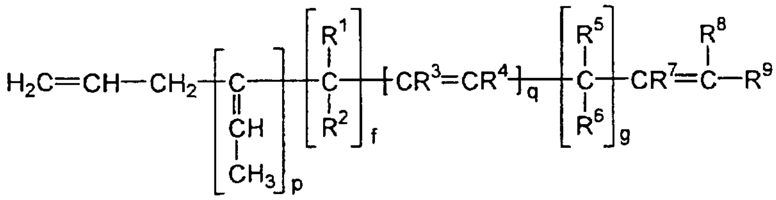

··· (2-1)

wherein p and q are 0 or 1 with the proviso that p and q are not simultaneously 0;

f is an integer of 0 to 5 with the proviso that f is not 0 when both p and q are 1;
g is an integer of 1 to 6;
$R^1$, $R^2$, $R^3$, $R^4$, $R^5$, $R^6$ and $R^7$ are each independently a hydrogen atom or an alkyl group having 1 to 3 carbon atoms;
$R^8$ is an alkyl group having 1 to 3 carbon atoms; and
$R^9$ is a hydrogen atom, an alkyl group having 1 to 3 carbon atoms or a group represented by $-(CH_2)_n-CR^{10}=C(R^{11})R^{12}$ wherein n is an integer of 1 to 5, $R^{10}$ and $R^{11}$ are each independently a hydrogen atom or an alkyl group having 1 to 3 carbon atoms and $R^{12}$ is an alkyl group having 1 to 3 carbon atoms, with the proviso that $R^9$ is a hydrogen atom or an alkyl group having 1 to 3 carbon atoms when both p and q are 1.

Among nonconjugated trienes or tetraenes (A4-1) represented by the formula (2-1), nonconjugated trienes (A4-2) represented by the following formula (2-2) are preferable in view of the balance between the braking performance and the fuel consumption performance, vulcanization feature, processing performance on the vulcanization (scorching stability) and the like.

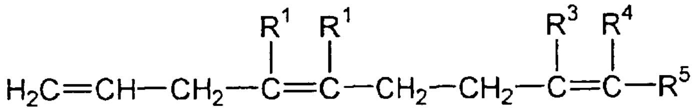

··· (2 2)

wherein $R^1$ to $R^5$ are each independently a hydrogen atom, a methyl group or an ethyl group, with the proviso that $R^4$ and $R^5$ do not simultaneously represent a hydrogen atom.

Further, the nonconjugated trienes (A4-2) represented by the formula (2-2) correspond to the nonconjugated trienes or tetraenes (A4-1) represented by the formula (2-1), above all, the nonconjugated trienes wherein f is 0, g is 2, p is 0, q is 1 and $R^5$ and $R^6$ are a hydrogen atom. Among the nonconjugated trienes (A4-2) represented by the formula (2-2), the compounds in which both $R^3$ and $R^5$ are a methyl group are preferred. The nonconjugated polyene copolymer according to the invention obtained using such nonconjugated triene (A4-2) as monomer raw materials can be used for the rubber composition to be described later and from which tires superior especially both in the braking performance and the fuel consumption performance can be produced.

Specific examples of the nonconjugated trienes or tetraenes (A4-1) represented by the formula (2-1) include compounds given below (excluding those falling under the formula (2-2)):

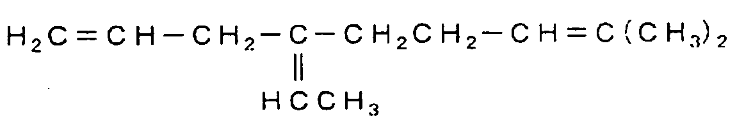

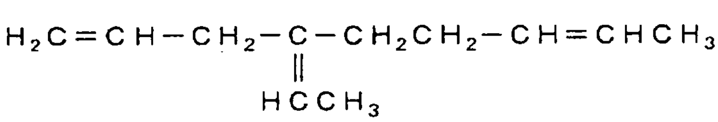

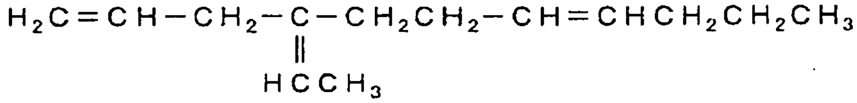

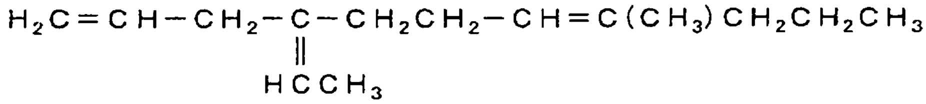

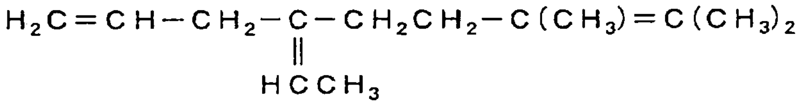

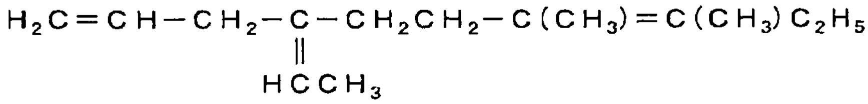

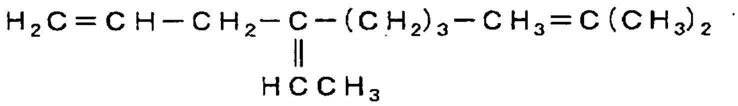

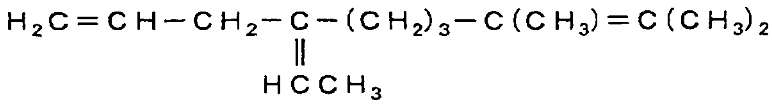

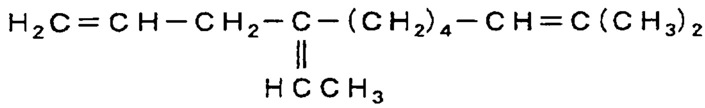

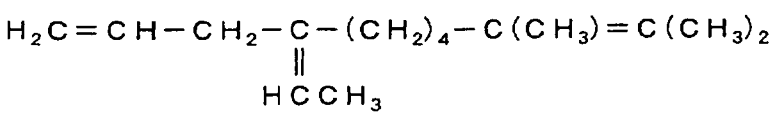

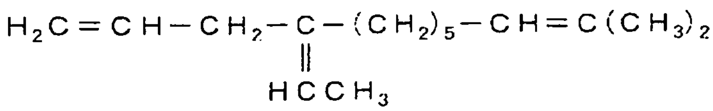

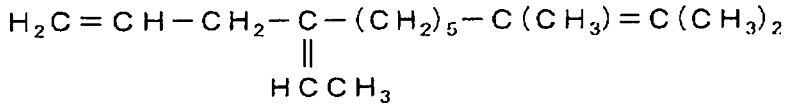

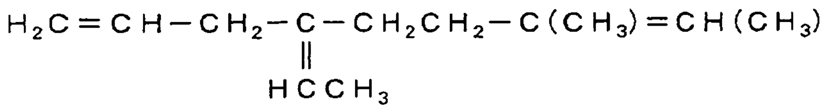

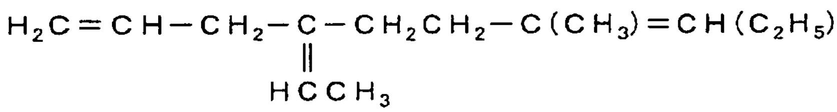

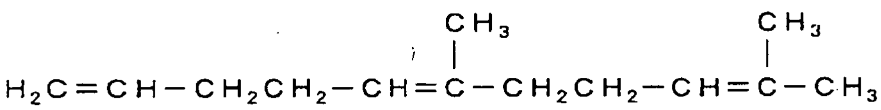

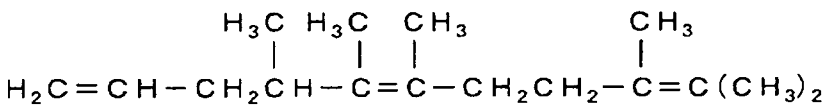

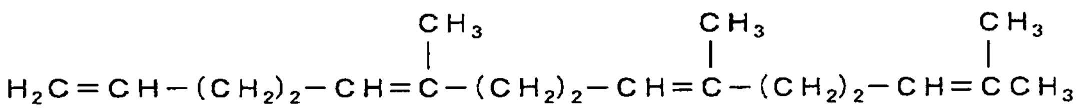

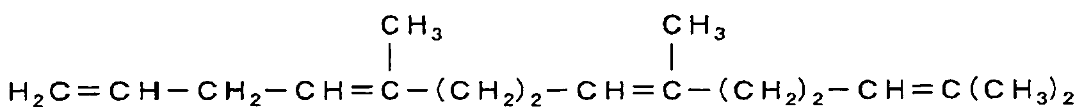

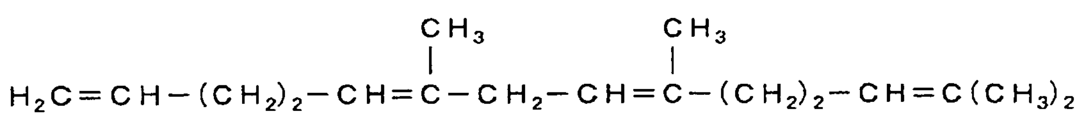

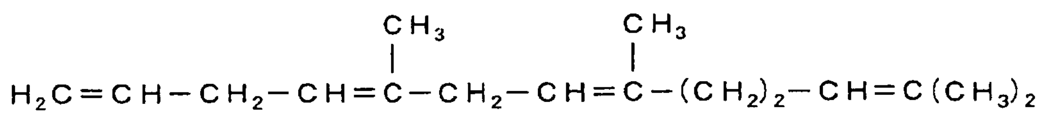

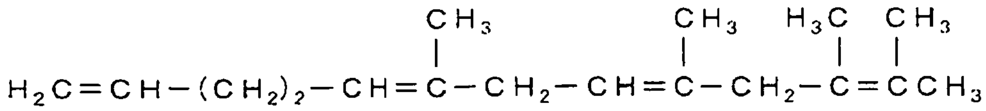

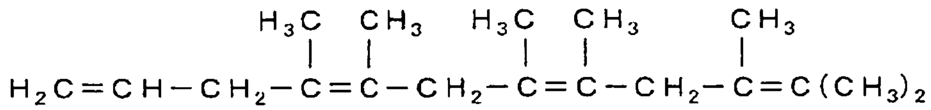

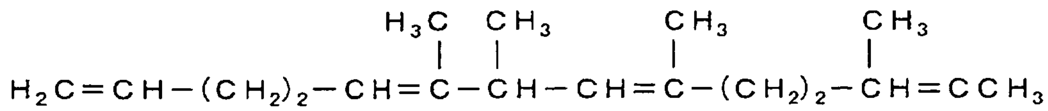

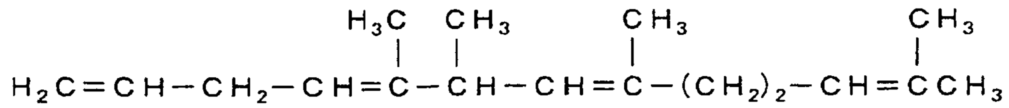

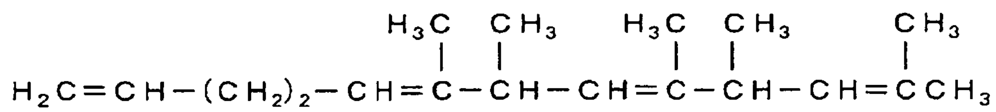

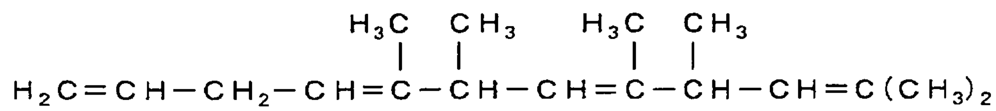

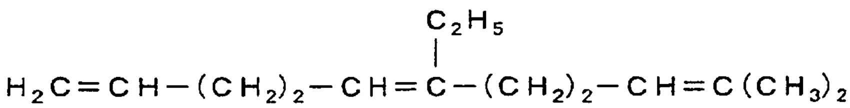

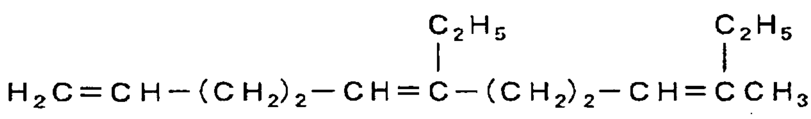

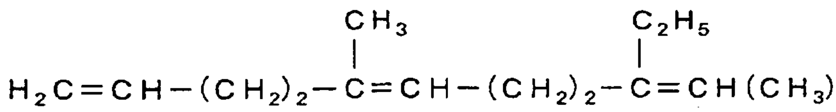

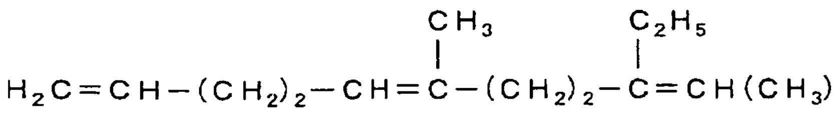

Specific examples of the nonconjugated trienes (A4-2) represented by the formula (2-2) include compounds given below:

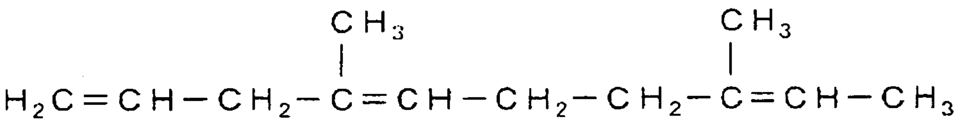

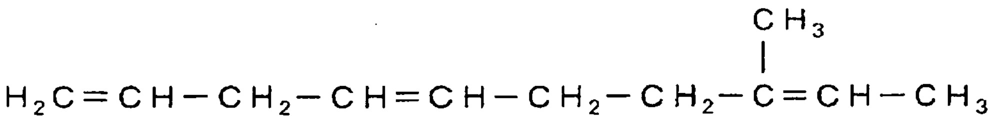

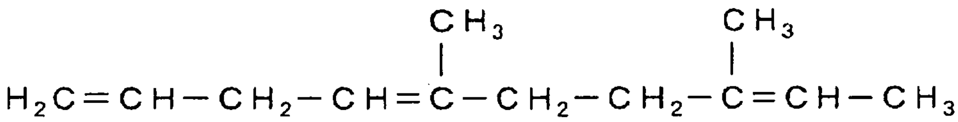

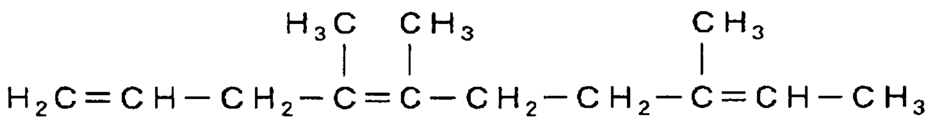

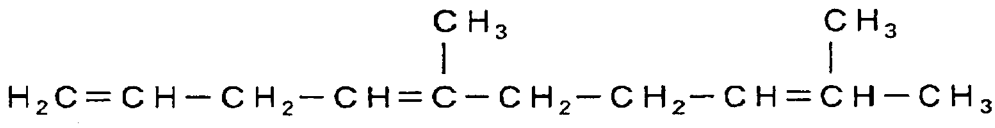

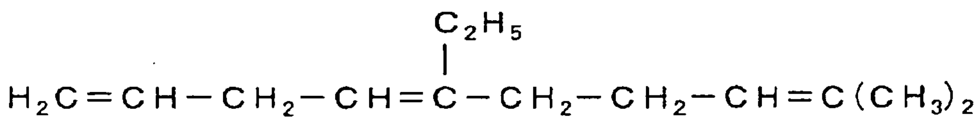

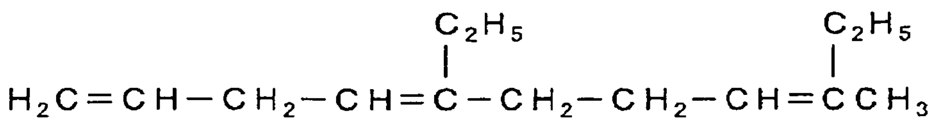

The nonconjugated trienes or tetraenes (A4-1) represented by the formula (2-1) can be produced by a known method, for example, methods in detail described in JP-A No. 9-235327 and 2001-114837 filed by the present applicant.

[Process for Producing Nonconjugated Polyene Copolymer]

The nonconjugated polyene copolymer according to the present invention can be produced by copolymerizing an α-olefin (A1) and a nonconjugated polyene (A2), preferably the α-olefin (A1) and a nonconjugated cyclic polyene (A3), in the presence of a catalyst.

As the catalyst used in the production of the first nonconjugated polyene copolymer, for example, those which are composed of a transition metal compound (C), such as a compound of vanadium (V), zirconium (Zr) and titanium (Ti), and an organoaluminum compound or an organoaluminum-oxy compound (D) and/or an ionizing ionic compound (E) may be employed. Examples of the catalyst used in the production of the second nonconjugated polyene copolymer include a vanadium-based catalyst composed of a soluble vanadium compound (c-1) and an organoaluminum compound (d-1). As the catalyst used in the production of the third nonconjugated polyene copolymer, for example, those which are composed of a transition metal compound (C), such as a compound of zirconium (Zr) and titanium (Ti), and an organoaluminum compound or an organoaluminum-oxy compound (D) and/or an ionizing ionic compound (E) may be employed.

Specific examples of the catalyst include (1) a vanadium-based catalyst composed of a soluble vanadium compound (c-1) and an organoaluminum compound (d-1), and (2) a metallocene-based catalyst composed of a metallocene compound (c-2) of a transition metal selected from metals of Group 4 elements of the periodic table of elements of 1 to 18 groups (which applies to all the cases in the following), an organoaluminum-oxy compound (d-2) and/or an ionizing ionic compound (e-1).

Examples of the soluble vanadium compound (c-1) constituting the vanadium-based catalyst include vanadium compounds represented by the formulae (3) or (4) given below:

$$VO(OR)_aX_b \qquad (3)$$

$$VO(OR)_cX_d \qquad (4)$$

wherein R represents a hydrocarbon group; X represents a halogen atom; and a, b, c and d each satisfies $0 \le a \le 3$, $0 \le b \le 3$, $2 \le a + b \le 3$, $0 \le c \le 4$, $0 \le d \le 4$ and $3 \le c + d \le 4$.

As the soluble vanadium compound (c-1), electron donor-added products of soluble vanadium compounds obtained by contacting with an electron donor may also be employed.

As the organoaluminum compound (d-1) for forming the vanadium-based catalyst, those in which at least one Al-C bond is included in the molecule can be employed. Examples of such a compound include organoaluminum compounds represented by the following formula (5):

$$(R^1)_mAl(OR^2)_nH_pX_q \qquad (5)$$

wherein $R^1$ and $R^2$ represent each a hydrocarbon group which may be identical with or different from each other and which has usually 1 to 15 carbon atoms, preferably 1 to 4 carbon atoms; X represents a halogen atom; and m, n, p and q each represent a numeral which meets $0 < m \le 3$, $0 \le n < 3$, $0 \le p < 3$ and $0 \le q < 3$, with $m + n + p + q = 3$.

The metallocene compound (c-2) constituting the metallocene-based catalyst is that of a metal selected from the transition metals of Group 4 of the periodic table and is, specifically, one represented by the following formula (6):

$$MLx \qquad (6)$$

wherein M represents a transition metal selected from the Group 4 of the periodic table; x represents the valence of the transition metal M; and L represents a ligand.

Specific examples of the transition metal in the formula (6) represented by the symbol M include zirconium, titanium and hafnium. The ligands L in the formula (6) coordinate to the transition metal M, wherein at least one of these ligands L has a cyclopentadienyl skeleton.

In the case where the compound represented by the formula (6) has two or more groups having a cyclopentadienyl skeleton as a ligand L, two of these groups having a cyclopentadienyl skeleton may be bonded together through an alkylene group which may have a substituent or through a substituted silylene group.

When the transition metal of the metallocene compound represented by the formula (6) has a valence of 4, it is represented more specifically by the formula (7):

$$R^2_kR^3_lR^4_mR^5_nM \qquad (7)$$

wherein M is the same transition metal as that given in the formula (6), $R^2$ represents a group (ligand) having a cyclopen-

tadienyl skeleton; $R^3$, $R^4$ and $R^5$ each independently represent a group (ligand) with or without a cyclopentadienyl skeleton; and k is an integer of 1 or greater, wherein k + 1 + m + n = 4.

As the metallocene compound (c-2), there may also be employed those of bridged structure in which, in the above formula (7), at least two of the ligands $R^2$, $R^3$, $R^4$, and $R^5$, for example, $R^2$ and $R^3$ are the group (ligand) having a cyclopentadienyl skeleton and such at least two groups are bonded to each other through an alkylene group, a substituted alkylene group, a silylene group or a substituted silylene group.

It is also possible to use compounds represented by the formula (8) given below, as the metallocene compound (c-2).

$$LaMX_2 \qquad (8)$$

in which M is a metal of Group 4 or of the lanthanide series of the periodic table; La represents a derivative of nonlocalized $\pi$-bonding group which provides the active site of the metal M with a captive geometry, and the two X's each independently represent a hydrogen atom, a halogen atom, a hydrocarbon group having 20 or less carbon atoms, a silyl group having 20 or less silicon atoms or a germyl group having 20 or less germanium atoms.

Among these compounds represented by the formula (8), preferred are those represented by the following formula (9):

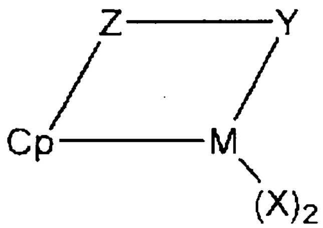

(9)

wherein M is titanium, zirconium or hafnium; X has the same meaning as that of the formula (8); Cp represents a substituted cyclopentadienyl group having a substituent Z and bonded to M by $\pi$-bonding; Z represents an oxygen atom, a sulfur atom, a boron atom or an element of Group 14 of the periodic table, such as silicon, germanium or tin; and Y is a ligand containing nitrogen, phosphorus, oxygen or sulfur, wherein Z and Y may form together a condensed ring.

As the metallocenes compound(c-2) represented by the formula (8) or (9), a titanium compound in which the central metal atom is titanium and which have a ligand containing one cyclopentadienyl skeleton may preferably be used. As one method for the nonconjugated polyene copolymer according to the invention in which the B value satisfies the formula [1], there is a method of using the metallocene compound represented by the formula (8) or formula (9).

Next, the description is directed to the organoaluminum oxy-compound (d-2) and to the ionizing ionic compound (e-1) to be used for preparing the metallocene catalyst. As the organoaluminum-oxy compound (d-2), known aluminoxanes or benzene-insoluble organoaluminum-oxy compounds (d-2) may be used.

Specifically, these known aluminoxanes are represented by the following formula (11) or (12):

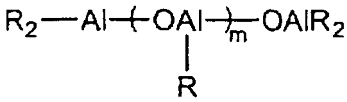

··· (11)

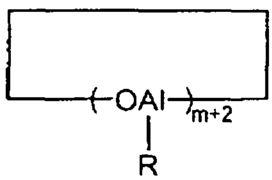

··· (12)

wherein R is a hydrocarbon group, such as a methyl group, an ethyl group, a propyl group and a butyl group, preferably a methyl group and an ethyl group, particularly preferably a methyl group; and m is an integer of 2 or greater, preferably

of 5 to 40.

As the ionizing ionic compound (e-1), which may sometimes be referred to as an ionic ionizing compound or ionic compound, there may be exemplified Lewis acids, ionic compounds, borane compounds and carborane compounds.

For producing the nonconjugated polyene copolymer according to the invention, the α-olefin (A1) and the nonconjugated polyene (A2) are subjected to copolymerization usually in a liquid phase in the presence of the desired catalyst. Here, a hydrocarbon solvent is generally used, but monomers may be used as the solvent.

The copolymerization may be carried out in a batchwise or continuous way. On carrying out the copolymerization in batchwise way, the catalyst is used at the desired concentration.

Temperature and pressure in the copolymerization may be suitably selected depending on types of a monomer and a catalyst. In general, the copolymerization may be carried out under optimal conditions in which the temperature is in the range of -50 to 150°C and the pressure is in the range of 0 to 7.8 MPa.

In particular, when the second nonconjugated polyene copolymer according to the invention is produced, it is preferable to employ a method in which the nonconjugated polyene (A2-1) and the nonconjugated polyene (A2-2) are used together in the presence of the vanadium-based catalyst under the above-mentioned conditions to polymerize, or a method in which the nonconjugated polyene (A2-2) is used to polymerize at a high polymer concentration or much higher polymer concentration and/or an iodine value is increased to increase the insoluble content.

Further, in particular, when the third nonconjugated polyene copolymer according to the invention is produced, it is preferable to employ a method in which the nonconjugated polyene (A2-1) and the nonconjugated polyene (A2-2) are used together, similarly in the presence of the metallocene catalyst which is preferably used in the production of the first nonconjugated polyene copolymer according to the invention, under the above-mentioned conditions to polymerize, or a method in which the nonconjugated polyene (A2-2) is used to polymerize at a relatively high polymerization temperature of 90°C or more, preferably 110°C or more.

In the production of the second and third nonconjugated polyene copolymers according to the invention in which the nonconjugated polyene (A2-1) and the nonconjugated polyene (A2-2) are preferably used, it is preferable to set such that the content of the structural units derived from nonconjugated polyene (A2-1) is 1/10 to 1000-fold moles, preferably 1/10 to 500-fold moles of the structural units derived from nonconjugated polyene (A2-2).

On the copolymerization, the α-olefin (A1) and the nonconjugated polyene (A2) are supplied to the polymerization system in such an amount that the nonconjugated polyene copolymer is obtained in the composition specified above. Further, on the copolymerization, a molecular weight regulator such as hydrogen may be also used.

By performing the copolymerization as described above, the nonconjugated polyene copolymer according to the invention is usually obtained as a polymerization solution containing it. This polymerization solution is treated in a usual way to obtain the nonconjugated polyene copolymer.

[Rubber Composition]

The rubber composition according to the present invention is a rubber composition comprising the nonconjugated polyene copolymer according to the invention (hereinafter denoted as the nonconjugated polyene copolymer (A)) and a diene-based rubber (B), wherein the proportion of the contents of these components, the nonconjugated polyene copolymer (A)/diene rubber (B) in a weight ratio, is in the range of 60/40 to 0.1/99.9, preferably 50/50 to 1/99, more preferably 40/60 to 5/95. When the proportion of the contents of both components is in the range given above, it is possible to produce tires which have both excellent braking performance and fuel consumption performance, and to obtain the rubber composition which can reveal excellent features in the improved weather resistance, in the controlled damping rate and the like, wherein the closer the weight ratio to the above-mentioned preferable range or the more preferable range is, the more excellent the rubber composition in the balance between the braking performance and the fuel consumption performance and in the improved weather resistance, in the controlled damping rate will be.

Since the nonconjugated polyene copolymer (A) is used in the invention and thus particularly the hardness after covulcanization with the diene-based rubber (B) can be decreased, it is preferably used for the tires.

As the diene-based rubber (B) used in the invention, every known diene-based rubber having double bond(s) in the main chain and having at least partially structural units derived from a conjugated diene compound can be used without limitation, but a polymer or copolymer rubber made from the conjugated diene compound as the main monomer is preferred. The diene-based rubber (B) includes natural rubber (NR) and hydrogenated rubber. For the diene-based rubber, those which have iodine values of 100 or more, preferably 200 or more, more preferably 250 or more are preferred.

Specific examples of the diene-based rubber (B) include natural rubber (NR), isoprene rubber (IR), styrene/butadiene rubber (SBR), butadiene rubber (BR), chloroprene rubber (CR), acrylonitrile/butadiene rubber (NBR), nitrile rubber and hydrogenated nitrile rubber. Among them, natural rubber (NR), isoprene rubber (IR), styrene/butadiene rubber (SBR) and butadiene rubber (BR) are preferred, particularly preferably styrene/butadiene rubber (SBR). The diene-based rubbers (B) may be used either solely or in a combination of two or more of them.

As the natural rubber (NR), those standardized by Green Book (international package standards for qualities

of commercial grades of natural rubber) may be used. As the isoprene rubber (IR), those having specific gravities in the range of 0.91 to 0.94 and Mooney viscosity [ML(1+4)100°C] in the range of 30 to 120 may be preferably used.

As the styrene/butadiene rubber (SBR), those having specific gravities in the range of 0.91 to 0.98 and Mooney viscosity [ML(1+4)100°C] in the range of 20 to 120 may be preferably used. As the butadiene rubber (BR), those having specific gravities in the range of 0.90 to 0.95 and Mooney viscosity [ML(1+4)100°C] in the range of 20 to 120 may be preferably used.

The rubber composition according to the invention is a rubber composition capable of being vulcanized. While it may be used as an unvulcanized product, more excellent features may be revealed by using it as a vulcanized product. The vulcanization may be carried out by a method of heating with a vulcanizing agent (F) or by a method of irradiation of electron beam without using the vulcanizing agent (F).

When the rubber composition is vulcanized by heating it, compounds constituting a vulcanizing system comprising a vulcanizing agent (F), a vulcanization accelerator,a vulcanization aid and the like may be admixed to the rubber composition. As the vulcanizing agent (F), for example, conventionally known various vulcanizing agents such as sulfur, sulfur compounds, organic peroxides and the like may be used. Among the above various vulcanizing agents, sulfur and sulfur compounds are preferred, particularly preferably sulfur, since a rubber composition having excellent characteristic properties can be obtained by the use thereof. In the case that the vulcanizing agent is sulfur or sulfur compounds, it may be added in an amount of 0.1 to 10 parts by weight, preferably 0.5 to 5 parts by weight, based on 100 parts by weight of the total amount of the nonconjugated polyene copolymer (A) and the diene-based rubber (B). In the case the vulcanizing agent is organic peroxides, it may be added in an amount of 0.05 to 15 parts by weight, preferably 0.15 to 5 parts by weight, based on 100 parts by weight of the total amount of the nonconjugated polyene copolymer (A) and the diene-based rubber (B). When sulfur or a sulfur compound is used as the vulcanizing agent, it is preferable to use in combination with a vulcanization accelerator. When the organic peroxide is used as the vulcanizing agent, it is preferable to use in combination with a vulcanization aid.

The rubber composition according to the present invention may contain a filler (G) comprising a reinforcing agent such as carbon black and inorganic fillers; and a softener such as petroleum-based, coal tar-based, fatty oilbased softeners, waxes, fatty acid salts, and synthetic polymeric substances. The rubber composition according to the present invention may contain, as various agents, for example, a compound constituting a foaming agent system such as a foaming agent and a foaming aid, an antioxidant (stabilizer), a processing aid, a plasticizer, a colorant and other rubber compounding agents. The types and formulating amounts of these agents may be suitably selected depending on uses.

[Preparation of Rubber Composition]

The rubber composition according to the present invention may be prepared from the nonconjugated polyene copolymer (A) and the diene-based rubber (B) together with the optionally incorporated other components given above by a preparation technique used in general for preparing rubber blends. It may be prepared by, for example, kneading the nonconjugated polyene copolymer (A), the diene-based rubber (B) and the optionally incorporated other components on an internal mixer such as a Banbury mixer, a kneader or Intermix, at a temperature of 80 to 170°C for 3 to 10 minutes; admixing thereto a vulcanizing agent (F) and, if necessary, a vulcanization accelerator, a vulcanization aid, a foaming agent and the like to knead the resulting mixture on a roll or on a kneader at a roll temperature of 40 to 80°C for 5 to 30 minutes; and taking out the kneaded mass in portions. In this manner, the rubber composition (rubber blend) is prepared usually in a form of ribbon or sheet. In the case where a low kneading temperature is permitted in the internal mixer, the vulcanizing agent (F), a vulcanization accelerator, a foaming agent and the like may be simultaneously admixed thereto.

The vulcanized product (vulcanized rubber) of the rubber composition according to the invention may be usually obtained by subjecting the unvulcanized rubber composition described above to a preliminary forming by various forming techniques using forming apparatuses such as an extrusion molding machine, a calendar roll, a press machine, an injection molding machine and a transfer molding machine, into a desired form and effecting the vulcanization of the resulting formed product, simultaneously with this forming or after the formed product has been transferred to a vulcanization vessel, by heating it or irradiating it by an electron beam. In the case of the foamed product, the unvulcanized rubber blend containing a foaming agent is subjected to vulcanization, as described above, wherein foaming of the formed product is simultaneously attained with the vulcanization so as to obtain a foamed product.

In the case of vulcanizing the rubber composition by heating, it is preferable to employ a heating vessel embodiment such as in a heating mode by hot air, glass beads fluidized bed, ultrahigh frequency electromagnetic wave (UHF), steam or hot molten-salt bath (LCM), at a temperature of 150 to 270°C for 1 to 30 minsutes.

In the case where the vulcanization is effected by irradiation with electron beam without incorporating the vulcanizing agent (F), the preliminarily formed rubber composition may be irradiated with an electron beam of energy of 0.1 to 10 MeV, preferably 0.3 to 2 MeV so as to reach an absorbed dose of 0.5 to 35 Mrad, preferably 0.5 to 10 Mrad. For effecting the molding vulcanization, a mold may or may not be used. In the case wherein no mold is used, the rubber composition is usually molded and vulcanized in a continuous manner.

The rubber composition according to the present invention renders both the improvement in the braking performance due to the improvement of the gripping ability on the road face and the improvement in the fuel consumption performance due to reduction of rolling resistance during steady maneuvering, so that tires having both excellent braking performance and fuel consumption performance can be obtained by using the rubber composition according to the invention as the raw material. The rubber composition according to the invention is also excellent in weather resistance, ozone resistance, rubber elasticity, mechanical strength and the like.

The rubber composition according to the invention may be widely used as starting materials of rubber articles, but it can be suitably used as the rubber material for tires. Specific examples of the rubber material for tires include materials for tire tread and for tire side wall. Above all, the rubber composition according to the invention can be most preferably used for the material (raw material) for tire tread, whereby tires having both excellent braking performance and fuel consumption performance, and weather resistance, ozone resistance and the like can be obtained, in which the characteristic properties of the rubber composition according to the invention are most effectively revealed therefore.

The rubber composition according to the invention may comprise only the nonconjugated polyene copolymer (A) and the diene-based rubber (B) or may comprise other rubber(s), other resin(s), a vulcanizing agent (F), a vulcanization aid, a vulcanization accelerator, a filler (G) and other components, for example, the above-mentioned additives.

The content of the nonconjugated polyene copolymer (A) and the diene-based rubber (B) in the rubber composition according to the invention is in the range of preferably 3% by weight or more, more preferably 5 to 90% by weight. The rubber composition according to the invention has both excellent braking performance and fuel consumption performance, and has also excellent rubber elasticity, mechanical strength, weather resistance, ozone resistance, hardness and the like.

[Modifier for Tires]

The modifier for tires according to the invention comprises the nonconjugated polyene copolymer (A) according to the invention. For example, the modifier for tires according to the invention can be added to the tires comprising the diene-based rubber, to thus provide tires having both excellent braking performance and fuel consumption performance, and also having excellent rubber elasticity, mechanical strength, weather resistance, ozone resistance, hardness and the like.

[Rubber Material for Tires]

The rubber material for tires according to the invention comprises the rubber composition according to the invention. The rubber material for tires according to the invention has both excellent braking performance and fuel consumption performance, and also has excellent rubber elasticity, mechanical strength, weather resistance, ozone resistance, hardness and the like.

[Tire Tread and Tire]

The tire tread according to the invention is produced by vulcanizing the rubber material for tires according to the invention. The tire tread has both excellent braking performance and fuel consumption performance, and also has excellent weather resistance, ozone resistance and the like. Further, the tire according to the invention are provided with the tire tread. The tire according to the invention has both excellent braking performance and fuel consumption performance, and also has excellent weather resistance, ozone resistance and the like.

[EXAMPLES]

Hereinafter, the present invention will be more specifically described by way of Examples, but it is not intended to limit the present invention thereto.

[Example X1]

The polymerization was carried out in a continuous way using a reactor equipped with a stirrer made of a stainless steel (SUS) and having a capacity of 300 liters, while maintaining the temperature at 80°C and keeping the solution level at 100 L. (t-Butylamido)dimethyl(tetramethyl-$\eta^5$-cyclopentadienyl)silanetitanium dichloride as a main catalyst, $(C_6H_5)_3CB(C_6F_5)_4$ as a co-catalyst and triisobutylaluminum (hereinafter denoted as "TIBA") as an organoaluminum compound were used. Raw material supply conditions are as follows:

[Table 1]

| Hexane | Ethylene | Propylene | ENB | Hydrogen | Main catalyst | Co-catalyst | TIBA |
|---|---|---|---|---|---|---|---|
| kg/h | kg/h | kg/h | kg/h | Nl/h | mmol/h | mmol/h | mmol/h |
| 24.5 | 3.7 | 3.8 | 4.5 | 20 | 0.27 | 0.81 | 2.5 |

The polymerization solution obtained was subjected to a standard steam stripping operation to obtain a resin. The copolymer obtained had an ethylene content of 64.4 mol%, a propylene content of 30.1 mol%, an ENB content of 5.5 mol% and a Mooney viscosity [ML(1+4)100°C] of 55. The yield was 5.6 kg per hour.

[Example X2]

Polymerization was carried out under the same conditions as in Example X1 except that the material supply conditions were changed. The raw material supply conditions are as follows:

[Table 2]

| Hexane | Ethylene | Propylene | ENB | Hydrogen | Main catalyst | Co-catalyst | TIBA |
|---|---|---|---|---|---|---|---|
| kg/h | kg/h | kg/h | kg/h | Nl/h | mmol/h | mmol/h | mmol/h |
| 24.6 | 3.8 | 3.8 | 4.2 | 22 | 0.26 | 0.78 | 2.5 |

The copolymer obtained had an ethylene content of 65.1 mol%, a propylene content of 30.3 mol%, an ENB content of 4.6 mol% and a Mooney viscosity [ML(1+4)100°C] of 55. The yield was 5.6 kg per hour.

[Comparative Example X1]

Polymerization was carried out under the same conditions as in Example X1 except that the material supply conditions were changed. The raw material supply conditions are as follows:

[Table 3]

| Hexane | Ethylene | Propylene | ENB | Hydrogen | Main catalyst | Co-catalyst | TIBA |
|---|---|---|---|---|---|---|---|
| kg/h | kg/h | kg/h | kg/h | Nl/h | mmol/h | mmol/h | mmol/h |
| 22.8 | 3.7 | 3.8 | 6.2 | 20 | 0.28 | 0.84 | 2.5 |

The copolymer obtained had an ethylene content of 62.8 mol%, a propylene content of 29.8 mol%, an ENB content of 7.4 mol% and a Mooney viscosity [ML(1+4)100°C] of 55. The yield was 5.9 g per hour.

[Comparative Example X2]

Polymerization was carried out under the same conditions as in Example X1 except that the material supply conditions were changed. The raw material supply conditions are as follows:

[Table 4]

| Hexane | Ethylene | Propylene | ENB | Hydrogen | Main catalyst | Co-catalyst | TIBA |
|---|---|---|---|---|---|---|---|
| kg/h | kg/h | kg/h | kg/h | Nl/h | mmol/h | mmol/h | mmol/h |
| 24.9 | 3.9 | 3.8 | 3.7 | 23 | 0.25 | 0.75 | 2.5 |

The resin obtained had an ethylene content of 65.9 mol%, a propylene content of 30.6 mol%, an ENB content of 3.5 mol% and a Mooney viscosity [ML(1+4)100°C] of 55. The yield was 5.5 kg per hour.

[Comparative Example X3]

Polymerization was carried out under the same conditions as in Example X1 except that the catalyst and the material supply conditions were changed, the polymerization temperature was 40°C and the polymerization solution was subjected to standard decalcification before steam stripping. Dichloroethoxyvanadium oxide was used as a main catalyst and ethylaluminum sesquichloride was used as a co-catalyst. The raw material supply conditions are as follows:

[Table 5]

| Hexane | Ethylene | Propylene | ENB | Hydrogen | Main catalyst | Co-catalyst |
|---|---|---|---|---|---|---|
| kg/h | kg/h | kg/h | kg/h | Nl/h | mmol/h | mmol/h |
| 44.6 | 1.2 | 10.6 | 1.11 | 7 | 9 | 63 |

The copolymer obtained had an ethylene content of 60.9 mol%, a propylene content of 30.1 mol%, an ENB content of 9.0 mol% and a Mooney viscosity [ML(1+4)100°C] of 55. The yield was 0.71 kg per hour.

The results are collectively shown in the following Table 6.

[Table 6]

| | Ex. X1 | Ex. X2 | Comp. Ex. X1 | Comp. Ex. X2 | Comp. Ex. X3 |
|---|---|---|---|---|---|
| Ethylene (mol%) | 64.4 | 65.1 | 62.8 | 65.9 | 60.9 |
| Propylene (mol%) | 30.1 | 30.3 | 29.8 | 30.6 | 30.1 |
| ENB (mol%) | 5.5 | 4.6 | 7.4 | 3.5 | 9.0 |
| Iodine value (g/100 g) | 38 | 32 | 48 | 26 | 57 |
| ML(1+4)100°C | 55 | 55 | 55 | 55 | 55 |
| B value*1 | 1.06 | 1.06 | 1.06 | 1.06 | 1.35 |
| Tg (°C)*2 | -17 | -19 | -5 | -25 | -5 |
| *1: B value was calculated as follows: | | | | | |

First, the following nine NMR integration values were obtained:

(1) αβ, (2) αγ + αδ, (3) βγ, (4) βδ, (5) γδ, (6) δδ, (7) 3E, (8) 3Z and (9) αα + 1Z + 5E + 5Z + 6E + 6Z

Herein, a symbol consisting of numbers and alphabetic characters in (7) to (9) is carbons derived from ENB, and the numbers indicate the positions in the formula given below, and the alphabetic characters, E and Z denote E isomer and Z isomer, respectively. Further, Greek characters indicate the positions of carbon atoms located between carbon atoms on the main chain wherein two shortest methyl groups are bonded with each other and a carbon atom adjacent to a carbon atom to which the methyl group is bonded, is assumed as α. For example, the carbon atom on the main chain is adjacent to a carbon atom to which one methyl group is bonded and αγ is assigned to a carbon atom at the third in distance from the carbon atom to which the other methyl group is bonded.

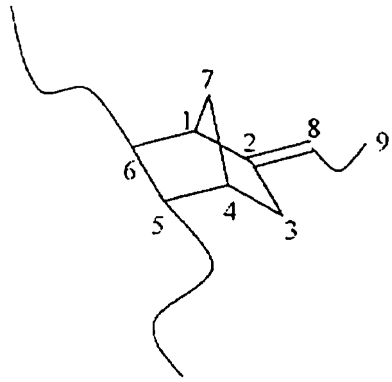

When the integration values were actually calculated, (2) was a total of the plural peaks near 37 to 39 ppm, (6) was a value obtained by subtracting the γγ and γδ peaks from the total of the plural peaks near 29 to 31 ppm, and (9) was the total of the plural peaks near 44 to 48 ppm.

Further, αα was calculated as follows. The identification of the peaks was done according to the above literature: αα = αα + 1Z + 5E + 5Z + 6E + 6Z - 2 × 3E - 3 × 3Z = (9) - 2 × (7) - 3 × (8)

Subsequently, the 6 dyads obtained from three monomers were calculated from the obtained integration values as follows. Further, the dyads of NN (ENB-ENB chain) and NP (ENB-propylene chain) derived from a small composition of ENB was 0 and the dyad of NE had twice the value corresponding to a molar fraction calculated from absorption intensity assigned to a carbon atom on a cyclic ENB.

PP (propylene-propylene chain) = αα + αβ/4

PE (propylene-ethylene chain) = αγ + αδ + αβ/2

EE (ethylene-ethylene chain) = (βδ + δδ)/2 + (γδ + βγ)/4

NE (ENB-ethylne chain) = (3E + 3Z) × 2

Finally, each molar fraction of the composition was determined as follows:

a (ethylene molar fraction) = (EE + PE/2)/(PP + PE + EE + 3E + 3Z)

c (ethylene/α-olefin dyad molar fraction) = PE/(PP + PE + EE + NE)

d (ethylene/nonconjugated polyene dyad molar fraction) = NE/(PP + PE + EE + NE)

e (α-olefin molar fraction) = (PP + PE/2)/(PP + PE + EE + 3E + 3Z)

f (nonconjugated polyene molar fraction) = (3E + 3Z)/(PP + PE + EE + 3E + 3Z)

Each molar fraction of the composition calculated above, is assigned to the mathematical expression 1 to determine the mathematical expression 2, and thus the B value was calculated:

$$B = [(PE + NE)/(PP + PE + NE + EE)]/[(EE + PE/2)[(PP + PE/2) + (3E + 3Z)]/(PP + PE + EE + 3E + 3Z)^2] \quad [2]$$

In the mathematical expression 2, it shows that the larger the B value, the shorter the block chain of α-olefin (propylene) units or nonconjugated cyclic polyene units and the distribution of α-olefin (propylene) units and nonconjugated cyclic polyene units is uniform. On the contrary, it shows that the smaller the B value, the distribution of the nonconjugated cyclic polyene copolymer is not uniform and the longer the block chain.

*2: Tg: the nonconjugated cyclic polyene copolymer was press molded at 190°C to form a strip sample of 10 mm width, 2 mm thickness and 30 length. The dynamic viscoelasticity measurement was carried out by using this sample on a testing apparatus RDS-II (manufactured by Rheometrics Inc.) under conditions of a frequency of 10 Hz, a strain of 0.1% and a temperature elevation rate of 2°C/min, wherein the peak temperature on the damping rate (tan δ) is assumed as Tg.

[Example X3, and Comparative Examples X4, X5, X6 and X7]

Using the components as given in the following Table 7 in a proportion given therein, a unvulcanized rubber blend was prepared by kneading them on an open roll (the front roll/the rear roll = 60°C/60°C, 16/18 rpm). This rubber blend was processed on a press heated at 160°C for 15 minutes into a vulcanized sheet, with which the following tests were carried out. The results are shown in the following Table 8.

[Table 7]

| | Ex. X3 | Comp. Ex. X4 | Comp. Ex. X5 | Comp. Ex. X6 | Comp. Ex. X7 |
|---|---|---|---|---|---|
| Copolymer of Ex. X1 *1 | 30 | - | - | - | - |
| Copolymer of Comp. Ex. X1 *2 | - | 30 | - | - | - |
| Copolymer of Comp. Ex. X2 *3 | - | - | 30 | - | - |
| Copolymer of Comp. Ex. X3 *4 | - | - | - | 30 | - |
| SBR *5 | 70 | 70 | 70 | 70 | 100 |
| Zinc white | | 3 | 3 | 3 | 3 |
| Stearic acid | 1 | 1 | 1 | 1 | 1 |

(continued)

| | Ex. X3 | Comp. Ex. X4 | Comp. Ex. X5 | Comp. Ex. X6 | Comp. Ex. X7 |
|---|---|---|---|---|---|
| HAF carbon black *6 | 50 | 50 | 50 | 50 | 50 |
| Vulcanization accelerator CBZ *7 | 1.5 | 1.5 | 1.5 | 1.5 | 1.5 |
| Sulfur | 1.75 | 1.75 | 1.75 | 1.75 | 1.75 |

*1: Copolymer of Example X1: see Table 1
*2: Copolymer of Comparative Example X1: see Table 3
*3: Copolymer of Comparative Example X2: see Table 4
*4: Copolymer of Comparative Example X3: see Table 5
*5: SBR: a styrene/butadiene rubber, NIPOL 1502 (trademark), a product of ZEON Corporation, iodine value = 357
*6: HAF carbon black: = HAF ASAHI #70 (trademark), a product of Asahi Carbon Co., Ltd.
*7: Vulcanization accelerator CBZ: SANCELER CM (trademark), a product of Sanshin Chemical Industry Co., Ltd.

[Table 8]

| | Ex. X3 | Comp. Ex. X4 | Comp. Ex. X5 | Comp. Ex. X6 | Comp. Ex. X7 |
|---|---|---|---|---|---|
| $M_{100}$ (MPa) *1 | 4.00 | 4.21 | 3.89 | 4.74 | 2.90 |
| $T_B$ (MPa) *2 | 21.6 | 21.8 | 19.8 | 20.8 | 24.2 |
| $E_B$ (%) *3 | 270 | 280 | 250 | 270 | 400 |
| $H_A$ (SHORE A) *4 | 71 | 71 | 70 | 74 | 67 |
| tan $\delta$ (0°C) *5 | 0.29 | 0.37 | 0.22 | 0.33 | 0.16 |
| tan $\delta$ (60°C) *5 | 0.14 | 0.13 | 0.14 | 0.13 | 0.15 |
| Resistance fatigue (damaged) *6 | 16440 | 14490 | 16480 | 12350 | 18450 |

(continued)

| | Ex. X3 | Comp. Ex. X4 | Comp. Ex. X5 | Comp. Ex. X6 | Comp. Ex. X7 |
|---|---|---|---|---|---|
| Resistance fatigue (no damaged) *7 | 39450 | 32470 | 39940 | 28450 | 70440 |

*1: $M_{100}$: Tensile stress at 100% elongation was measured according to JIS K6251. The smaller the M100, the lower the hardness and the broader the ground contact area, and thus braking performance of a tire is good.
*2: $T_B$: Tensile strength at break was measured according to JIS K6251.
*3: $E_B$: Tensile elongation was measured according to JIS K6251.
*4: $H_A$ (Shore A) = Shore A hardness was measured according to JIS K6253.
*5: tan δ: The tan δ (damping rate) of the rubber composition (crosslinked in a proportion of Table 6) at 0°C was represented as an index of braking performance of a tire. The larger is the tan δ at 0°C, the more excellent the braking performance of the tire is. The tan δ (damping rate) of the rubber composition at 60°C was represented as an index of fuel consumption of a vehicle. The smaller the tan δ at 60°C, the more excellent the fuel consumption of the vehicle is. The tan δ (damping rate) is determined, using a strip sample of 10 mm width, 2 mm thickness and 30 mm length prepared from the rubber composition, on a testing apparatus RDS-II (manufactured by Rheometrics Inc.) from the temperature dispersion of viscoelasticity observed under conditions of 0.05% strain and 10 Hz frequency.
*6: Fatigue resistance (damaged): Dumbbell-shaped No. 1 test pieces described in JIS K 6251 were punched from the vulcanized rubber sheet and the test pieces had dents of 2 mm formed at the center of the longitudinal direction. The five test pieces thus obtained were subjected to extension fatigue under conditions of an extension rate of 40%, a preset temperature of 23°C and a rotation speed of 300 times/min using a constant elongation, constant load fatigue tester (Model FT-3121, manufactured by Ueshima Seisakusho Co., Ltd.). An average value of the times at which the dumbbells were broken was determined.
*7: Fatigue resistance (no damaged): Dumbbell-shaped No. 1 test pieces described in JIS K 6251 were punched from the vulcanized rubber sheet. The five test pieces were subjected to extension fatigue under conditions of an extension rate of 100%, a preset temperature of 23°C and a rotation speed of 300 times/min using a constant elongation, constant load fatigue tester (Model FT-3121, manufactured by Ueshima Seisakusho Co., Ltd.). An average value of the times at which the dumbbells were broken was determined.

[Example Y1]

The polymerization was carried out in a continuous way using a reactor equipped with a stirrer made of a stainless steel (SUS) and having a capacity of 300 liters, while maintaining the temperature at 40°C and keeping the solution level at 100 L. The polymerization solution after polymerization was subjected to standard decalcification and then subjected to steam stripping to obtain a polymer. Dichloroethoxyvanadium oxide was used as a main catalyst and ethylaluminum sesquichloride was used as a co-catalyst. The raw material supply conditions are as follows:

[Table 9]

| Hexane | Ethylene | Propylene | ENB | Hydrogen | Main catalyst | Co-catalyst |
|---|---|---|---|---|---|---|
| kg/h | kg/h | kg/h | kg/h | Nl/h | mmol/h | mmol/h |
| 41.0 | 3.3 | 12.1 | 2.44 | 35 | 75 | 525 |

The copolymer obtained had an ethylene content of 61.1 mol%, a propylene content of 29.9 mol%, an ENB content of 9.0 mol% and a Mooney viscosity [ML(1+4)100°C] of 55. The yield was 5.70 kg per hour.

[Example Y2]

Polymerization was carried out under the same conditions as in Example Y1 except that the material supply conditions were changed. The raw material supply conditions are as follows:

[Table 10]

| Hexane | Ethylene | Propylene | ENB | VNB | Hydrogen | Main catalyst | Co-catalyst |
|---|---|---|---|---|---|---|---|
| kg/h | kg/h | kg/h | kg/h | Kg/h | Nl/h | mmol/h | mmol/h |
| 41.5 | 5.3 | 12.1 | 1.73 | 0.26 | 38 | 75 | 525 |

The polymerization solution obtained was subjected to a standard decalcification and then subjected to steam stripping to obtain a resin. The resin obtained had an ethylene content of 62.8 mol%, a propylene content of 29.8 mol%, an ENB content of 6.40 mol%, a VNB content of 0.98 mol% and a Mooney viscosity [ML(1+4)100°C] of 55. The yield was 5.9 kg per hour. The insoluble content was 38%.

[Comparative Example Y1]

Polymerization was carried out under the same conditions as in Example Y1 except that the material supply conditions were changed. The raw material supply conditions are as follows:

[Table 11]

| Hexane | Ethylene | Propylene | ENB | Hydrogen | Main catalyst | Co-catalyst |
|---|---|---|---|---|---|---|
| kg/h | kg/h | kg/h | kg/h | Nl/h | mmol/h | mmol/h |
| 44.6 | 1.2 | 10.6 | 1.11 | 7 | 9 | 63 |

The copolymer obtained had an ethylene content of 60.9 mol%, a propylene content of 30.1 mol%, an ENB content of 9.0 mol% and a Mooney viscosity [ML(1+4)100°C] of 55. The yield was 0.71 kg per hour.

The results are collectively shown in the following Table 12.

[Table 12]

| | Example Y1 | Example Y2 | Comparative Example Y1 |
|---|---|---|---|
| Ethylene (mol%) | 61.1 | 62.8 | 60.9 |
| Propylene (mol%) | 29.9 | 29.8 | 30.1 |
| ENB (mol%) | 9.0 | 6.4 | 9.0 |
| VNB (mol%) | - | 0.98 | - |
| Iodine value (g/100 g) | 56 | 48 | 57 |
| ML(1+4) 100°C | 55 | 55 | 55 |
| Tg (°C) *1 | -5' | -11 | -5 |
| Decalin insoluble content at 135°C | 0.8 | 38 | Less than 0.2 |

*1: Measured in the same manner as in a footnote *2 in Table 6

*2: 0.25 g (±10%) of a sample finely cut was weighed (A(g)) and introduced into a 500-ml Erlenmeyer flask, and then 250 ml of decalin is added thereto. A rotator was placed in the Erlenmeyer flask and the flask was capped. The flask was put in an aluminum block bath having liquid temperature of 135°C to preheat for 15 minutes. Thereafter, the rotator was rotated to carry out dissolution under stirring for 60 minutes. The dissolved sample is filtered using a 150-mesh stainless wire gauze vessel previously weighed (B(g)). The inside of the flask was washed with fresh decalin (room temperature) and filtered, wherein this operation was repeated three times. Further, the inside of the wire gauze vessel was washed with fresh decalin (room temperature). The wire gauze vessel was dried for 1 hour using a vacuum drier at 105 ± 5°C. After standing to cool to room temperature, the weight of the wire gauze vessel was weighed (C(g)). The decalin insoluble content is calculated from three weights obtained above by the following formula:

$$\text{Decalin insoluble content (\%)} = (C - B) \times 100/A$$

[Examples Y3 and Y4, and Comparative Example Y2]

Using the components as given in the following Table 13 in a proportion given therein, a unvulcanized rubber blend was prepared by kneading them on an open roll (the front roll/the rear roll = 60°C/60°C, 16/18 rpm). This rubber blend was processed on a press heated at 160°C for 15 minutes into a vulcanized sheet, with which the following tests

were carried out. The results are shown in the following Table 14.

[Table 13]

| | Example Y3 | Example Y4 | Comparative Example Y2 |
|---|---|---|---|
| Copolymer of Ex. Y1 *1 | 30 | - | - |
| Copolymer of Ex. Y2 *2 | - | 30 | - |
| Copolymer of Comp. Ex. Y1 *3 | - | - | 30 |
| SBR *4 | 70 | 70 | 70 |
| Zinc white | 3 | 3 | 3 |
| Stearic acid | 1 | 1 | 1 |
| HAF carbon black *5 | 50 | 50 | 50 |
| Vulcanization accelerator CBZ *6 | 1.5 | 1.5 | 1.5 |
| Sulfur | 1.75 | 1.75 | 1.75 |

*1: Copolymer of Example Y1: see Table 9
*2: Copolymer of Example Y2: see Table 10
*3: Copolymer of Comparative Example Y1: see Table 11
*4: the same as a footnote *5 in Table 7
*5: HAF carbon black: the same as a footnote *6 in Table 7
*6: Vulcanization accelerator CBZ: the same as a footnote *7 in Table 7

[Table 14]

| | Example Y3 | Example Y4 | Comparative Example Y2 |
|---|---|---|---|
| $T_B$ (MPa) *1 | 23.5 | 25.1 | 20.8 |
| $E_B$ (%) *2 | 310 | 350 | 270 |
| $H_A$ (SHORE A) *3 | 74 | 74 | 74 |
| tan δ (0°C) *4 | 0.33 | 0.33 | 0.33 |
| tan δ (60°C) *4 | 0.13 | 0.13 | 0.13 |

*1: $T_B$: Elongation at break, measured in the same manner as in a footnote *2 in Table 8
*2: $E_B$: Tensile elongation, measured in the same manner as in a footnote *3 in Table 8
*3: $H_A$ (Shore A) = Shore A hardness, measured in the same manner as in a footnote *4 in Table 8
*4: tan δ: Measured in the same manner as in a footnote *5 in Table 8 using the rubber composition crosslinked in a proportion of Table 13

[Example Z1]

The polymerization was carried out in a continuous way using a reactor equipped with a stirrer made of a stainless steel (SUS) and having a capacity of 300 liters, while maintaining the temperature at 80°C and keeping the solution level at 100 L. (t-Butylamido)dimethyl(tetramethyl-$\eta^5$-cyclopentadienyl)silanetitanium dichloride as a main catalyst, $(C_6H_5)_3CB(C_6F_5)_4$ as a co-catalyst and triisobutylaluminum as an organoaluminum compound were used. Raw material supply conditions are as follows:

[Table 15]

| Hexane | Ethylene | Propylene | ENB | VNB | Hydrogen | Main catalyst | Co-catalyst | TIBA |
|---|---|---|---|---|---|---|---|---|
| kg/h | kg/h | kg/h | kg/h | Kg/h | Nl/h | mmol/h | mmol/h | mmol/h |
| 22.8 | 3.7 | 3.8 | 6.0 | 0.25 | 23 | 0.28 | 0.84 | 2.5 |

The polymerization solution obtained was subjected to a standard steam stripping operation to obtain a resin. The resin obtained had an ethylene content of 62.8 mol%, a propylene content of 29.8 mol%, an ENB content of 7.14 mol%, a VNB content of 0.26 mol% and a Mooney viscosity [ML(1+4)100°C] of 55. The yield was 5.9 kg per hour.

[Comparative Example Z1]

Polymerization was carried out under the same conditions as in Example Z1 except that the material supply conditions were changed. The raw material supply conditions are as follows:

[Table 16]

| Hexane | Ethylene | Propylene | ENB | VNB | Hydrogen | Main catalyst | Co-catalyst | TIBA |
|---|---|---|---|---|---|---|---|---|
| kg/h | kg/h | kg/h | kg/h | Kg/h | Nl/h | mmol/h | mmol/h | mmol/h |
| 22.8 | 3.7 | 3.8 | 6.0 | - | 20 | 0.28 | 0.84 | 2.5 |

The resin obtained had an ethylene content of 62.8 mol%, a propylene content of 29.8 mol%, an ENB content of 7.4 mol% and a Mooney viscosity [ML(1+4)100°C] of 55. The yield was 5.9 kg per hour.

[Comparative Example Z2]

Polymerization was carried out under the same conditions as in Example Z1 except that the material supply conditions were as given in the following Table.

[Table 17]

| Hexane | Ethylene | Propylene | ENB | VNB | Hydrogen | Main catalyst | Co-catalyst | TIBA |
|---|---|---|---|---|---|---|---|---|
| kg/h | kg/h | kg/h | kg/h | Kg/h | Nl/h | mmol/h | mmol/h | mmol/h |
| 27.9 | 2.9 | 5.5 | 5.8 | - | 20 | 0.28 | 0.84 | 2.5 |

The resin obtained had an ethylene content of 49.6 mol%, a propylene content of 43.4 mol%, an ENB content of 7.0 mol% and a Mooney viscosity [ML(1+4)100°C] of 52. The yield was 5.0 kg per hour.

The results are collectively shown in the following Table 18.

[Table 18]

| | Example Z1 | Comparative Example Z1 | Comparative Example Z2 |
|---|---|---|---|
| Ethylene (mol%) | 62.8 | 62.8 | 49.6 |
| Propylene (mol%) | 29.8 | 29.8 | 43.4 |
| ENB (mol%) | 7.14 | 7.4 | 7.0 |
| VNB (mol%) | 0.26 | - | - |
| Iodine value (g/100 g) | 48 | 48 | 64 |
| ML(1+4)100°C | 55 | 55 | 52 |
| B value *1 | 1.06 | 1.06 | 1.05 |
| Tg (°C) *2 | -5 | -5 | -18 |
| $\eta_{0.1}$* *3 | 32100 | 20390 | 19520 |

(continued)

| | Example Z1 | Comparative Example Z1 | Comparative Example Z2 |
|---|---|---|---|
| $\eta_{10}$* *3 | 3710 | 3660 | 3740 |
| $\eta_{0.1}$*/$\eta_{10}$* | 0.0148 | 0.0126 | 0.0121 |

*1: B value: Measured in the same manner as in a footnote *1 in Table 6
*2: Tg: Measured in the same manner as in a footnote *2 in Table 6
*3: $\eta_{0.1}$* and $\eta_{10}$*: The frequency dependency of η* (complex viscosity coefficient) is determined, using a disk-shaped sample having a diameter of 25 mm and a thickness of 2 mm, on a viscoelasticity tester (Model RDS II, manufactured by Rheometrics Inc.) under conditions of a measuring temperature of 190°C, a frequency of 0.01 to 500 rad/s and a strain ratio of 1.0%. $\eta_{0.1}$* indicates complex viscosity coefficient at the frequency of 0.1 rad/s and $\eta_{10}$* indicates complex viscosity coefficient at the frequency of 10 rad/s.

[Example Z2, and Comparative Examples Z3 and Z4]

Using the components as given in the following Table 19 in a proportion given therein, a unvulcanized rubber blend was prepared by kneading them on an open roll (the front roll/the rear roll = 60°C/60°C, 16/18 rpm). This rubber blend was processed on a press heated at 160°C for 15 minutes into a vulcanized sheet, with which the following tests were carried out. The results are shown in the following Table 20.

[Table 19]

| | Example Z2 | Comparative Example Z3 | Comparative Example Z4 |
|---|---|---|---|
| Copolymer of Ex. Z1 *1 | 30 | - | - |
| Copolymer of Comp. Ex. Z1 *2 | - | 30 | - |
| Copolymer of Comp. Ex. Z2 *3 | - | - | 30 |
| SBR *4 | 70 | 70 | 70 |
| Zinc white | 3 | 3 | 3 |
| Stearic acid | 1 | 1 | 1 |
| HAF carbon black *5 | 50 | 50 | 50 |
| Vulcanization accelerator CBZ *6 | 1.5 | 1.5 | 1.5 |
| Sulfur | 1.75 | 1.75 | 1.75 |

*1: Copolymer of Example Z1: see Table 15
*2: Copolymer of Comparative Example Z1: see Table 16
*3: Copolymer of Example Z2: see Table 17
*4: the same as a footnote *5 in Table 7
*5: HAF carbon black: the same as a footnote *6 in Table 7
*6: Vulcanization accelerator CBZ: the same as a footnote *7 in Table 7

[Table 20]

| | Example Z2 | Comparative Example Z3 | Comparative Example Z4 |
|---|---|---|---|
| $T_B$ (MPa) *1 | 23.5 | 21.8 | 19.5 |
| $E_B$ (%) *2 | 330 | 280 | 250 |
| $H_A$ (SHORE A) *3 | 71 | 71 | 69 |
| tan δ (0°C) *4 | 0.37 | 0.37 | 0.37 |

(continued)

| | Example Z2 | Comparative Example Z3 | Comparative Example Z4 |
|---|---|---|---|
| tan δ (60°C) *4 | 0.13 | 0.13 | 0.13 |
| *1: $T_B$: Elongation at break, measured in the same manner as in a footnote *2 in Table 8<br>*2: $E_B$: Tensile elongation, measured in the same manner as in a footnote *3 in Table 8<br>*3: $H_A$ (Shore A) = Shore A hardness, measured in the same manner as in a footnote *4 in Table 8<br>*4: tan δ: measured in the same manner as in a footnote *5 in Table 8 using the rubber composition crosslinked in a proportion of Table 19 | | | |

**Claims**

1. A nonconjugated polyene copolymer comprising a random copolymer having structural units derived from α-olefin (A1) of 2 to 20 carbon atoms and structural units derived from nonconjyugated polyene (A2), said nonconjugated polyene copolymer having a glass transition temerature (Tg) of -25 to 20 °C and Mooney viscosity of [ML(1+4) 100°C] of 5 to 190.

2. The nonconjugated polyene copolymer according to claim 1, said nonconjugated polyene compolymer comprising a random copolymer having structural units derived from α-olefin (A1) of 2 to 20 carbon atoms and structural units derived from nonconjyugated cyclic polyene (A3), wherein the content of structural units derived from α-olefin (A1) of 2 to 20 carbon atoms is more than 93 to 96 mol% and the content of structural units derived from nonconjyugated cyclic polyene (A3) is 4 to less than 7 mol%.

3. The nonconjugated polyene copolymer according to claim 2, wherein the nonconjugated polyene copolymer (A) consists only of the structural units derived from (A1) and the structural units derived from (A3).

4. The nonconjugated polyene copolymer according to claim 2 or 3, wherein the structural units derived from α-olefin (A1) of 2 to 20 carbon atoms contain at least structural units derived from ethylene and the molar ratio of the structural units derived from ethylene/structural units derived from α-olefin of 3 or more carbon atoms is in the range of 100/0 to 1/99.

5. The nonconjugated polyene copolymer according to any one of claims 2 to 4, wherein the content of structural units derived from ethylene of the nonconjugated polyene copolymer is in the range of 50 mol% or more based on 100 mol% of the total amount of α-olefin (A1) having 2 to 20 carbon atoms and nonconjugated cyclic polyene (A3) and a B value indicated below satisfies the relationship of the following formula [1]:

$$B \leq (1/a-1) \times 0.4 + 1 \qquad [1]$$

wherein B = (c + d)/(2 × a × (e + f)), in which a is an ethylene molar fraction; c is an ethylene/α-olefin dyad molar fraction; d is an ethylene/nonconjugated polyene dyad molar fraction; e is an α-olefin molar fraction; and f is a nonconjugated polyene molar fraction.

6. The nonconjugated polyene copolymer according to claim 1, said nonconjugated polyene copolymer comprising a random copolymer having structural units derived from α-olefin (A1) of 2 to 20 carbon atoms and structural units derived from nonconjyugated polyene (A2), wherein the content of structural units derived from α-olefin (A1) of 2 to 20 carbon atoms is 70 to 96 mol% and the content of the structural units derived from nonconjyugated polyene (A2) is 4 to 30 mol% and a decalin insoluble content at 135°C is 0.5% by weight or more.

7. The nonconjugated polyene copolymer according to claim 6, wherein the structural units derived from α-olefin (A1) of 2 to 20 carbon atoms contain at least structural units derived from ethylene and the molar ratio of the structural units derived from ethylene/structural units derived from α-olefin of 3 or more carbon atoms is in the range of 100/0 to 1/99.

**8.** The nonconjugated polyene copolymer according to claim 6 or 7, wherein at least part of the nonconjugated polyene (A2) of the nonconjugated polyene copolymer is the nonconjugated cyclic polyene (A3).

**9.** The nonconjugated polyene copolymer according to claim 1, wherein the nonconjugated polyene copolymer is a random copolymer from α-olefin (A1) of 2 to 20 carbon atoms and nonconjugated polyene (A2) and is a nonconjugated polyene copolymer which satisfies the following (iii) to (v) requirements:

(iii) an iodine value is 30 g/100 g or more;
(iv) it meets $0.0136 \leq (\eta_{0.1}^*)^{0.3859}/\eta_{10}^*$ wherein $\eta_{0.1}^*$ is a viscosity at 0.1 rad/sec (Pa·s) and $\eta_{10}^*$ is a viscosity at 10 rad/sec (Pa·s); and
(v) the content of the structural units derived from ethylene is in the range of 50 mol% or more based on 100 mol% of the total amount of α-olefin (A1) of 2 to 20 carbon atoms and nonconjugated polyene (A2) and a B value indicated below satisfies the relationship of the following formula [1]:

$$B \leq (1/a-1) \times 0.4 + 1 \qquad [1]$$

wherein $B = (c + d)/(2 \times a \times (e + f))$, in which a is an ethylene molar fraction; c is an ethylene/α-olefin dyad molar fraction; d is an ethylene/nonconjugated polyene dyad molar fraction; e is an α-olefin molar fraction; and f is a nonconjugated polyene molar fraction.

**10.** The nonconjugated polyene copolymer according to claim 9, wherein the nonconjugated polyene copolymer contains the content of structural units derived from α-olefin (A1) of 2 to 20 carbon atoms being 70 to 96 mol% and the content of structural units derived from nonconjugated polyene (A2) being 4 to 30 mol%.

**11.** The nonconjugated polyene copolymer according to claim 9 or 10, wherein at least part of the nonconjugated polyene (A2) of the nonconjugated polyene copolymer is the nonconjugated cyclic polyene (A3).

**12.** A rubber composition comprising the nonconjugated polyene copolymer according to claim 1 and a diene-based rubber (B).

**13.** The rubber composition according to claim 12, wherein the nonconjugated polyene copolymer is the nonconjugated polyene copolymer according to any one of claims 2 to 11 and the weight ratio of the nonconjugated polyene copolymer/diene rubber (B) is in the range of 60/40 to 0.1/99.9.

**14.** A modifier for tires comprising the copolymer according to any one of claims 1 to 11.

**15.** A rubber material for tires comprising the rubber composition according to claim 12.

**16.** A rubber material for tires comprising the rubber composition according to claim 13.

**17.** A tire tread obtained from the rubber material for tires according to claim 12 or 13.

**18.** A tire having the tire tread according to claim 17.

## INTERNATIONAL SEARCH REPORT

International application No.
PCT/JP2005/007017

A. CLASSIFICATION OF SUBJECT MATTER
Int.Cl[7] C08F210/00, 236/20, C08L9/00, 23/02

According to International Patent Classification (IPC) or to both national classification and IPC

B. FIELDS SEARCHED

Minimum documentation searched (classification system followed by classification symbols)
Int.Cl[7] C08F6/00-246/00, C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-114837 A (Mitsui Chemicals, Inc.), 24 April, 2001 (24.04.01), Claims; examples & WO 2001/12686 A1 & KR 2001075584 A & CN 1327454 A & EP 1217015 A1 & US 6787623 B1 | 1-18 |
| X | JP 2004-10863 A (The Yokohama Rubber Co., Ltd.), 15 January, 2004 (15.01.04), Claims; examples (Family: none) | 1,12,14,15,17,18 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 June, 2005 (01.06.05) | 21 June, 2005 (21.06.05) |
| Name and mailing address of the ISA/ Japanese Patent Office | Authorized officer |
| Facsimile No. | Telephone No. |

Form PCT/ISA/210 (second sheet) (January 2004)

INTERNATIONAL SEARCH REPORT

International application No.
PCT/JP2005/007017

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

This international application contains the following three inventions.
1. Invention of claims 1-5 and 12-18
2. Invention of claims 6-8
3. Invention of claims 9-11

These inventions are common in being an α-olefin/unconjugated polyene copolymer having a glass transition temperature from -25 to 20°C and a Mooney viscosity of 5-190. An α-olefin/unconjugated polyene copolymer having a glass transition temperature from -25°C to 20°C, however, is disclosed in JP 2004-10863 A.

(Continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest.

☒ No protest accompanied the payment of additional search fees.

Form PCT/ISA/210 (continuation of first sheet (2)) (January 2004)

INTERNATIONAL SEARCH REPORT

International application No.
PCT/JP2005/007017

Continuation of Box No.III of continuation of first sheet(2)

Further, the above-mentioned Mooney viscosity is within a very general range, and thus the copolymer disclosed in JP 2004-10863 A is considered to have a Mooney viscosity within such a range.

Consequently, the above-mentioned common feature is not practically novel, and thus there is no technical relationship among these inventions 1-3 involving one or more of the same or corresponding special technical features.

Form PCT/ISA/210 (extra sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001114837 A
- JP 9235327 A


### Non-patent literature cited in the description


- **J. C. RANDALL.** *Macromolecules,* 1982, vol. 15, 353
- **J. RAY.** *Macromolecules,* 1977, vol. 10, 773